(19) Europäisches Patentamt
European Patent Office
Office européen des brevets

(11) **EP 3 711 289 B1**

(12) **EUROPÄISCHE PATENTSCHRIFT**

(45) Veröffentlichungstag und Bekanntmachung des Hinweises auf die Patenterteilung:
**10.08.2022  Patentblatt 2022/32**

(21) Anmeldenummer: **18821985.1**

(22) Anmeldetag: **10.11.2018**

(51) Internationale Patentklassifikation (IPC):
**H04N 9/31** *(2006.01)*

(52) Gemeinsame Patentklassifikation (CPC):
**H04N 9/3194; H04N 9/3147; H04N 9/3185**

(86) Internationale Anmeldenummer:
**PCT/DE2018/000327**

(87) Internationale Veröffentlichungsnummer:
**WO 2019/096339 (23.05.2019 Gazette 2019/21)**

(54) **VERFAHREN ZUR AUTOMATISCHEN WIEDERHERSTELLUNG EINES EINGEMESSENEN ZUSTANDS EINES PROJEKTIONSSYSTEMS**

METHOD FOR AUTOMATICALLY RESTORING A CALIBRATED STATE OF A PROJECTION SYSTEM

PROCÉDÉ DE RESTAURATION AUTOMATIQUE D'UN ÉTAT CALIBRÉ D'UN SYSTÈME DE PROJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2017  DE 102017010683**

(43) Veröffentlichungstag der Anmeldung:
**23.09.2020  Patentblatt 2020/39**

(73) Patentinhaber: Domeprojection.com GmbH
**39112 Magdeburg (DE)**

(72) Erfinder:
• BEIER, Daniel
**39108 Magdeburg (DE)**
• GULAMHUSSENE, Danilo
**39114 Magdeburg (DE)**
• BODE, Christoph
**39104 Magdeburg (DE)**
• **STEINMANN, Christian**
**39106 Magdeburg (DE)**

(74) Vertreter: **Fischer, Volker**
**Sperling, Fischer & Heyner**
**Patentanwälte**
**Bruno-Wille-Straße 9**
**39108 Magdeburg (DE)**

(56) Entgegenhaltungen:
**EP-A1- 2 854 400     US-A1- 2016 353 068**

• **ZHANG ET AL: "Self-recalibration of a structured light system via plane-based homography", PATTERN RECOGNIT, ELSEVIER, GB, Bd. 40, Nr. 4, 14. Dezember 2006 (2006-12-14), Seiten 1368-1377, XP005730707, ISSN: 0031-3203, DOI: 10.1016/J.PATCOG.2006.04.001**

**Beschreibung**

Die Erfindung betrifft ein Verfahren zur automatischen Wiederherstellung eines eingemessenen Zustands eines Projektionssystems.

Die vorliegende Beschreibung bezieht sich auf eine Berechnung von geometrisch korrekten Entzerrungen für ein- und mehrkanalige Projektionen. Außerdem geht es um die Ermittlung und Berechnung der geometrisch korrekten Überblendungen in den Überlappungsbereichen der Einzelprojektionen, aus welchen die großflächige Projektion erzeugt wird. Insbesondere wird eine Strategie für eine automatisierte Rekalibrierung und Rückführung auf eine Ursprungskalibrierung für mehrkanalige Projektionen beschrieben.

Großflächige Projektionen werden aufgrund der für eine gute Sichtbarkeit notwendigen Lichtleistung und Auflösungen meistens aus mehreren einzelnen Projektionen oder Einzelprojektionen zusammengesetzt.

Derartige großflächige Projektionen, welche mittels eines sogenannten Projektionssystems erzeugt werden, setzen sich zumeist aus mehreren kleinen Einzelprojektionen oder Teilbildern zusammen, wobei die einzelnen Projektionskanäle, welche die Teilbilder erzeugen, in einer an die Projektionsfläche angepassten Weise geometrisch verzerrt und überblendet werden. Auf diese Art kann beispielsweise mittels vier Projektoren, welche jeweils ein Teilbild der großflächigen Projektion erzeugen, eine entsprechend großflächige homogene Projektion oder Darstellung auf der Projektionsfläche erzeugt werden.

Um eine sogenannte nahtlose großflächige Projektion, zusammengesetzt aus beispielsweise zwei oder vier Einzelprojektionen bzw. Teilbildern, zu erzeugen, müssen die einzelnen Projektionskanäle eingemessen werden. Dieser Vorgang des Einmessens der Projektionskanäle wird auch als Ausrichtung oder Alignment bezeichnet.

Für diesen Vorgang des Einmessens werden auf die Projektionsfläche beispielsweise vorgegebene Muster projiziert. Diese Muster markieren Punkte auf der Projektionsfläche oder sind derart gestaltet, dass sich Punkte aus ihnen ableiten lassen. Derart abgeleitete Punkte können aus zwei sich kreuzenden Linien oder beispielsweise aus einer Ecke einer ebenen geometrischen Figur gewonnen werden.

Dabei ist es vorgesehen, dass die räumlichen Positionen (X-, Y- und Z-Koordinate) dieser markierten Punkte, beispielsweise mittels zweier Kameras, vermessen werden. Auf Basis eines derart gewonnenen 3D-Punkte-Modells lässt sich die Überlappung der einzelnen Projektoren an jeder Stelle auf der Projektionsfläche (Screen) ermitteln und daraus auch ein sogenanntes Blending (Helligkeitsanpassung) für jeden an der Erzeugung der großflächigen Projektion beteiligten Projektor ableiten. Dieses bestimmte Blending kann beispielsweise mittels optischer Blendmasken realisiert werden, welche im Strahlengang vor dem jeweiligen Projektor angeordnet sind.

Nach dem bisher bekannten Stand der Technik werden Signalveränderungen der Videosignale der einzelnen Videokanäle der Projektoren, welche für je eine Teilbilderzeugung benötigt werden, nach einer Bilderzeugung mittels geeigneter Verfahren zur Verzerrung und zum Blending der Videosignale durchgeführt. Nachfolgend wird das derart veränderte Signal einem Projektor als Eingangssignal zugeführt, welcher das entsprechende Teilbild auf der Projektionsfläche erzeugt. Dieser Vorgang der Signalverarbeitung oder Signalveränderung wird üblicherweise für jeden an der Erzeugung der Projektion beteiligten Projektionskanal, also für jedes Teilbild, durchgeführt.

Somit werden die zur Erzeugung der großflächigen Projektion auf einer Projektionsfläche notwendigen Veränderungen der Projektionskanäle bzw. Teilbilder, beispielsweise zur Anpassung an die gegebene Projektionsfläche und/oder an ein Blending, direkt auf das Eingangssignal jedes Projektors aufgeprägt und beeinflussen somit die Projektion der dargestellten Teilbilder.

Das Einrichten einer großflächigen Projektion, bestehend aus mehreren Teilprojektionen bzw. Teilbildern, ist aufwendig. Sogenannte kamerabasierte Systeme zum Einrichten einer Projektion, welche über eine die Projektionsfläche einsehende Kamera verfügen, reduzieren den Aufwand des Einrichtens erheblich. Ein kamerabasiertes System bedingt aber hohe Voraussetzungen, um Ergebnisse hoher Güte zu erreichen. So sollte die Projektionsfläche möglichst vollständig von der Kamera eingesehen werden können.

Aus der EP 1 434 434 A1 ist ein Verfahren zur automatischen Kalibrierung eines Multiprojektorsystems mit mindestens zwei Projektoren bekannt, wobei mit einer beliebigen Anzahl von Bildern, die von verschiedenen Projektoren erzeugt werden, eine pixelgenau übereinandergelegte Darstellung erzeugt wird, um die Gesamtleuchtstärke zu erhöhen bzw. eine Stereodarstellung zu ermöglichen. Alternativ kann auch ein größeres Gesamtbild aus mehreren sich zumindest teilweise pixelgenau überlappenden Einzel-Projektionsbildern auf einer (Groß-)Leinwand dargestellt werden. Das zur Durchführung des Verfahrens benötigte System umfasst weiterhin eine Digital-Kamera und eine Ansteuerungseinheit zur Ansteuerung der Projektoren und der Kamera. Gemäß dem beschriebenen Verfahren wird zur automatischen Kalibrierung eines Multiprojektorsystems eine Erzeugung, Aufnahme und Bildfilterung von Streifenmustern realisiert, wobei eine größtmögliche Projektionsfläche gefunden und sowohl eine Berechnung von Warp-Feldern sowie ein Imagewarping durchgeführt wird.

Der Nachteil dieser bekannten Lösung besteht darin, dass keine Möglichkeit zur Rekalibrierung des Multiprojektorsystems gegeben ist. Im Fall einer Lageveränderung eines Projektors muss das gesamte Verfahren zur automatischen Kalibrierung eines Multiprojektorsystems im vollen Umfang erneut durchgeführt werden.

Aus der US 6,456,339 A1 ist ein Verfahren zur Erzeugung einer hochauflösenden Anzeige bekannt. Das Verfahren nutzt gespeicherte Pixelkorrekturinformation, welche auf die darzustellenden Pixeldaten angewendet werden und derart korrigierte oder modifizierte Pixeldaten erzeugen. Diese korrigierten oder modifizierten Pixeldaten beinhalten notwendige Verzerrungen und/oder Korrekturen, welche notwendig sind, um mithilfe mehrerer Projektoren ein zusammengesetztes Gesamtbild zu erzeugen. Vorgesehen ist es, dass die Pixeldaten in einem Rahmenpuffer gespeichert werden und die Pixelkorrekturinformationen auf die Pixeldaten im Rahmenpuffer vor der Anzeige angewendet werden. Alternativ wird zuerst die Pixelkorrekturinformation angewendet und die korrigierten Pixeldaten werden nachfolgend in dem Rahmenpuffer gespeichert. Die hochauflösende Anzeige wird dann aus den korrigierten Pixeldaten erzeugt. In einer bevorzugten Ausführungsform umfasst das System eine Vielzahl von Projektoren. Die Pixelkorrekturinformationen korrigieren die Fehlausrichtung von projizierten überlappenden Pixelarrays und sorgen für eine fehlerfreie Überlappung der Projektionsbereiche zu einer großflächigen Gesamtprojektion.

In einer anderen Ausführungsform überlappen sich die projizierten Bilder von mehreren Projektoren vollständig, und die Projektoren haben einen kleinen Füllfaktor, was zu einer hochauflösenden Anzeige führt.

Zur Erzeugung der Pixelkorrekturinformationen ist ein optisches Erfassen von physikalischen oder projizierten Testdiagrammen und deren Auswertung durch eine entsprechende Einheit vorgesehen. Vorzugsweise umfasst ein zur Erfassung der Testdiagramme geeigneter optischer Sensor mindestens eine Kamera, wie beispielsweise eine CCD-Kamera. Alternativ kann der optische Sensor auch mehrere orthogonale lineare Sensoranordnungen umfassen.

Der Nachteil dieser bekannten Lösung besteht ebenfalls darin, dass keine Möglichkeit zur Rekalibrierung des Multiprojektorsystems gegeben ist. Im Fall einer Lageveränderung eines Projektors muss das gesamte Verfahren zur automatischen Kalibrierung eines Multiprojektorsystems im vollen Umfang erneut durchgeführt werden.

Ist der Vorgang des erstmaligen Einmessens oder Alignments erfolgreich abgeschlossen worden, kann eine nahtlose großflächige Projektion fehlerfrei erzeugt werden, so dass die Überlappungsbereiche von einem Betrachter nicht mehr wahrgenommen werden können.

Derartige großflächige Projektionen bleiben oft nicht langzeitstabil. Schon eine leichte Veränderung der Ausrichtung eines Projektors hat eine große Auswirkung in der großflächigen Projektion, die Teilbilder driften auseinander. Dies kann beispielsweise durch thermische Veränderungen an den Projektoren oder ihren Gestellen passieren sowie aufgrund eines notwendigen Lampenwechsels in einem Projektor. Bedingt durch eine geringfügige Veränderung an einem oder mehreren Projektoren verändert sich auch die von dem betroffenen Projektor erzeugte Einzelprojektion, beispielsweise bezüglich ihrer Lage oder geometrischen Erstreckung auf der Projektionsfläche. In diesem Fall muss eine Wiederherstellung eines eingemessenen Zustands eines Projektionssystems, welche auch als eine Nachkalibrierung, ein erneutes Einmessens oder Realignment bezeichnet wird, durchgeführt werden. Hierbei erfolgt ein Zurückführen der Projektion auf den originalen Zustand nach dem Einmessen, um wieder eine fehlerfreie Darstellung einer nahtlosen großflächigen Projektion zu erhalten.

Möglich ist es, eine derartige Wiederherstellung eines eingemessenen Zustands manuell vorzunehmen. Diese sind aber zeitaufwändig und erfordern Expertenwissen.

Bekannt sind auch kamerabasierte Systeme zur Wiederherstellung eines eingemessenen Zustands. So wird in der Druckschrift B. Sajadi, A. Majumder, Autocalibrating Tiled Projectors on Piecewise Smooth Vertically Extruded Surfaces, IEEE Transactions on Visualization and Computer Graphics, Vol. 17, No. 9, 2011, S. 1209-1222 ein Verfahren zur Auto- und Recalibrierung von gekachelten Projektionen auf stückweise glatte, vertikal extrudierte Projektionsflächen, wie beispielsweise zylindrische Projektionsflächen oder CAVEs beschrieben, wobei mittels einer Kamera die gesamte Projektionsfläche erfasst wird. Zunächst wird anhand von Vergleichsbildern untersucht, ob eine Veränderung der Projektion stattgefunden hat und nachfolgend bestimmt, ob die Veränderung auf eine Veränderung der Positionen der Projektoren, der Kamera und/oder der Projektionsfläche zurückzuführen ist. Wird eine Veränderung der Position eines oder mehrerer Projektoren festgestellt, wird mittels dieses oder dieser Projektoren ein Muster auf die Projektionsfläche projiziert und durch Vergleich mit dem im kalibrierten Zustand aufgenommenen Muster die Projektion neu kalibriert. Wird eine Veränderung der Position der Kamera festgestellt, wird die Position der Kamera neu bestimmt. Wird eine Veränderung der Form oder der Position der Projektionsfläche festgestellt, wird das Koordinatensystem der Projektion neu definiert. Das in der vorgenannten Druckschrift beschriebene Verfahren ist auf stückweise glatte, vertikal extrudierte Projektionsflächen beschränkt.

Aus der US 2016/353068 A1 ist ein Projektionssystem bekannt, das eine einfache Rekalibrierung ermöglicht. Das Projektionssystem umfasst eine Vielzahl von Projektionseinheiten, die so konfiguriert sind, dass sie ein Bild als Ganzes projizieren; einen Empfänger, der so konfiguriert ist, dass er eine Anweisung zum Verschieben von Referenzpunkten empfängt, die einen Projektionszielbereich definieren, auf den die Vielzahl von Projektionseinheiten das gesamte Bild bei einer anfänglichen Kalibrierung projiziert; eine Speichereinheit, die so konfiguriert ist, dass sie die Referenzpunkte des Projektionszielbereichs speichert, die bei der anfänglichen Kalibrierung verwendet werden; eine Steuereinheit, die so konfiguriert ist, dass sie als Reaktion auf ein Ereignis eine Neukalibrierung startet; eine Einstelleinheit, die so konfiguriert ist, dass sie den Projektionszielbereich auf der Grundlage der in der Speichereinheit gespeicherten Bezugspunkte bei einer Neukalibrierung zurücksetzt; und eine Korrekturkoeffizienten-Berechnungseinrichtung, die so konfiguriert ist, dass sie Korrekturkoeffizienten für die Vielzahl von Projektionseinheiten auf der Grundlage des Projektionszielbereichs berechnet, der durch die Einstelleinheit zurückgesetzt wird.

Aus der EP 2 854 400 A1 ist eine Rekalibrierung bekannt, die durch eine Berechnung von Normalisierungsparameter ermöglicht wird.

Kamerabasierte Systeme zur Wiederherstellung eines eingemessenen Zustands setzen für ein gutes Ergebnis der Wiederherstellung eine vollständig mittels der Kamera einsehbare Projektionsfläche voraus. Somit müssen potentielle Hindernisse für die Dauer der Wiederherstellung entfernt werden.

Diese Wiederherstellung eines eingemessenen Zustands soll möglichst schnell und mit einem begrenzten Hardware-Aufwand erfolgen. Die nachfolgend aufgeführten Beschränkungen können die Genauigkeit einer Wiederherstellung beschränken und müssen bei einer Wiederherstellung entsprechend berücksichtigt werden.

Für den Fall, dass die großflächige Projektion mittels einer Kamera bei kamerabasierten Systemen nicht vollständig eingesehen werden kann, liegt eine Beschränkung der Genauigkeit durch eine Sichtbeschränkung vor. Eine derartige Einschränkung kann beispielsweise durch Aufbauten vor der Projektionsfläche, wie beispielsweise einem Cockpit in einem Flugsimulator, verursacht werden. Bedingt durch die eingeschränkte Sicht der Kamera können bei einer Wiederherstellung weniger Referenzpunkte auf der Projektionsfläche erkannt und somit auch weniger Referenzpunkte vermessen werden, als dies bei dem Vorgang des erstmaligen Einmessens mit einer unverbauten Sicht der Kamera auf die Projektionsfläche möglich war.

Eine weitere Beschränkung der Genauigkeit kann durch Ungenauigkeiten der neu vermessenen Marker verursacht werden. Diese Beschränkung tritt beispielsweise für den Fall ein, dass die Kamera derart angeordnet werden musste, dass diese außerhalb des Sichtbereiches des Betrachters platziert ist. In diesem Fall weist die Kamera einen sehr flachen Blickwinkel auf die Projektionsfläche auf.

Beispielsweise bei der Nutzung nur einer Kamera und einer damit verbundenen vollständigen Ausnutzung des Kamerabildes bis in die Ecken des Kamerabildes hinein, kann es bedingt durch eine geringere Güte der Optik der Kamera in den Randbereichen des Objektives zu einer Beschränkung der Genauigkeit kommen.

Eine Beschränkung der Genauigkeit kann auch durch eine begrenzte oder nicht ausreichende Auflösung der Kamera bzw. der Optik verursacht werden.

Durch Ungenauigkeiten bei der Bestimmung der Position der Kamera im kamerabasierten System, beispielsweise aufgrund von verschobenen Referenzmarken wie beispielsweise Laser-Markern, können ebenfalls Beschränkung der Genauigkeit verursacht werden.

Ein System zur Wiederherstellung eines eingemessenen Zustands soll trotz der beschriebenen Beschränkungen und den potentiellen Fehlerquellen wieder eine großflächige Projektion ohne Sprünge und Doppelbilder liefern, welche darüber hinaus stetig und möglichst nah an der originalen Einmessung bzw. dem Design ist.

Die Erfindung bezieht sich auf die Art und Weise der Zurückführung des Originalzustandes bzw. auf eine Wiederherstellung des eingemessenen Zustands des Projektionssystems.

Die Aufgabe der Erfindung besteht darin, ein Verfahren zur automatischen Wiederherstellung eines eingemessenen Zustands eines Projektionssystems anzugeben, welches eine einfache und fehlerfreie Ausrichtung eines Projektionssystems in einen ursprünglich eingemessenen fehlerfreien Zustand des Projektionssystems ermöglicht.

Die Aufgabe wird durch ein Verfahren mit den Merkmalen gemäß Patentanspruch 1 der selbstständigen Patentansprüche gelöst. Weiterbildungen sind in den abhängigen Patentansprüchen angegeben.

Sogenannten computergestützten Kalibrierverfahren für Projektionssysteme, basierend auf Design- bzw. Messdaten, ist gemein, dass sie als Zwischenlösung eine Zuordnung von Projektorkoordinaten zu 3D-Koordinaten auf der Projektionsfläche, dem Screen, benötigen, beispielsweise eine Zuordnung gemäß:

(xpypi, XYZi).

Diese Zuordnung kann eine begrenzte aber dichte Menge von Punktepaaren sein. Beispielsweise 30 x 20 Punktepaare pro Projektor.

Basierend auf diesen Daten können nachgelagert Korrekturdaten für beliebige Mappings berechnet werden. Wenn diese Zuordnung nicht oder nicht mehr genau ist, werden auch alle daraus berechneten Korrekturdaten ungenau.

Unter dem Begriff der 3D-Koordinaten werden Koordinaten in einem dreidimensionalen Koordinatensystem mit den Dimensionen X, Y, Z verstanden. Die vorliegende Beschreibung verwendet ein räumliches, einheitliches Bezugssystem, in dem die Lage und Orientierung der Einzelkomponenten wie Projektionsfläche (Screen), Projektoren, Projektion, Kameras usw. beschrieben werden kann.

Projektorkoodinaten, welche auch als Projektor-Bild-Koodinaten oder auch Screenspace-Koordinaten bezeichnet werden, sind zweidimensionale Koordinaten in dem vom Projektor darzustellenden Bild mit den Dimensionen x, y. Zur besseren Unterscheidung von den Kamerakoordinaten wird hier die Bezeichnung xp und yp verwendet.

Mappingkoordinaten, welche auch als Texturkoordinaten bezeichnet werden, verweisen auf einen Punkt in dem zu projizierenden Inhalt, welcher ein Bild oder eine Textur sein kann. Diese Koordinaten sind typischerweise zweidimensional (2D) mit den Koordinaten u und v, können aber um eine weitere Koordinate w erweitert sein, um beispielsweise auf volumentrischen Texturdaten verwendet werden zu können.

Der Begriff der Kamerakoordinaten bzw. Kamera-Bild-Koordinaten wird für zweidimensionale Koordinaten im Kamerabild mit den Dimensionen x und y verwendet. Zur besseren Unterscheidung von den Projektorkoordinaten wird die Bezeichnung xc und yc verwendet.

Entzerrte Kamerakoordinaten bzw. Kamera-Bild-Koordinaten sind zweidimensionale Koordinaten mit den Dimensionen x und y in einem idealisierten Kamerabild ohne Verzeichnung. Verwendet wird hier die Bezeichnung xc' und yc'.

Unter dem Begriff des Mappings wird eine Abbildung von 3D-Koordinaten im Raum auf 2D-Koordinaten verstanden. Dieses Mapping wird genutzt, um beliebige Punkte der Projektion einer 2D-Koordinate zuzuordnen. Im einfachen Fall einer planaren Projektion entlang der Z-Achse wäre das beispielsweise:

$$u = (X - Xmin) / (Xmax - Xmin) \quad v = (Y - Ymin) / (Ymax - Ymin).$$

Wobei Xmin/Xmax die linke bzw. rechte Mappingbegrenzung und Ymin/Ymax die untere bzw. obere Mappingbegrenzung darstellen. Damit werden 3D-Koordinaten innerhalb der Mappingbegrenzung in normalisierten 2D-Mappingkoordinaten abgebildet.

Bei der hier vorgeschlagenen Wiederherstellung eines eingemessenen Zustands eines Projektionssystems ist es vorgesehen, dass durch eine geeignete Kombination von potentiell lückenhaften, unvollständigen Daten eines erneuten Einmessens (Nachkalibrierung) mit den dichteren, vollständigeren Daten des erstmaligen Ersteinmessens oder den Daten aus einem Design, Lücken in den Daten des erneuten Einmessens geschlossen werden. Somit wird eine deutlich verbesserte Kalibriergenauigkeit auf der gesamten Projektionsfläche erreicht.

Eine Ursache für die Entstehung unvollständiger Daten und somit einer verringerten oder reduzierten Anzahl von nutzbaren Messpunkten bei einem erneuten Einmessen liegt beispielsweise darin, dass Teilbereiche der Projektionsfläche mittels einer oder mehrerer Kameras nicht eingesehen werden können.

Vorausgesetzt, dass die Projektoren des Projektionssystems fest verbaut sind und auf eine homogene Projektionsfläche projizieren, wird davon ausgegangen, dass zwischen einer Originalprojektion und einer späteren Projektion nur geringe Unterschiede, welche mittels eines Verschiebungsvektors ausgedrückt werden können, bestehen. Hierbei wird von einer Größenordnung im Bereich von 1/1000 bis 1/10 der Einzel-Projektionsgröße ausgegangen.

Weiterhin wird davon ausgegangen, dass diese Unterschiede zwischen den Projektionen nur niederfrequent innerhalb einer Einzelprojektion variieren. Da nur mit geringen Unterschieden mit einer niederfrequenten Varianz zwischen der Originalprojektion und der späteren Projektion zu rechnen ist, eignen sich Interpolationsverfahren besonders gut zur Verallgemeinerung, basierend auf sehr wenigen Punktepaaren, welche bei einem erneuten Einmessen erzeugt werden konnten.

Zur Interpolation der bei einem erneuten Einmessen, beispielsweise durch eine Beschränkung des Sichtbereichs der Kamera auf die projizierten Marker, nicht zu erzeugenden Daten der Messpunkte, werden sogenannte multivariate bzw. mehrdimensionale Interpolationen für verstreute Daten, auch als Daten auf irregulären Gittern bekannt, verwendet. Beispielsweise "Nächster Nachbar", "Inverse Distanz" oder "Thin Plate Spline", wobei eine Beschränkung hierauf nicht gegeben ist.

Zur Bestimmung der Punktepaare der Messdaten bei der Wiederherstellung des eingemessenen Zustands wird für die reduzierte Anzahl der bei der Wiedereinrichtung zur Verfügung stehenden Messpunkte je ein dreidimensionaler Offset, beispielsweise zwischen einer Position eines bei der erstmaligen Einmessung erkannten Messpunkts Q mit seiner X,Y und Z-Koordinate und der Position des gleichen Messpunkts Q' bei dem erneuten Einmessen, wie folgt bestimmt:

$$OffsetXYZi = XYZi' - XYZi.$$

Basierend auf 3*n Datenpaaren gilt:

(XYZi, OffsetXi)
(XYZi, OffsetYi)
(XYZi, OffsetZi).

Nachfolgend werden drei Interpolationen gemäß:

OffsetX(XYZ)
OffsetY(XYZ)
OffsetZ(XYZ)

bestimmt, um die drei Koordinaten eines Verschiebungsvektors zu schätzen.

Mit Hilfe der nun bestimmten Offset-Funktionen lässt sich zu jedem Punkt XYZ der Originaldaten ein geschätzter Punkt XYZ' für den aktuellen Zeitpunkt wie folgt berechnen:

$$X' = X + \text{OffsetX}(XYZ) \quad Y' = Y + \text{OffsetY}(XYZ) \quad Z' = Z + \text{OffsetZ}(XYZ).$$

Da die Originaldaten für jeden gemessenen Punkt auch die Position im Projektorraum enthalten haben, lassen sich nun Punktepaare (xpypi, XYZi') wie folgt berechnen:

(xpypi, XYZi + Offset(XYZi)).

Basierend auf den neu bestimmten Punktepaaren (xpypi, XYZi') lassen sich alle erforderlichen Korrekturdaten äquivalent zu einer erstmaligen Einmessung ableiten.

Nachfolgend werden Optimierungen bei der Wiederherstellung eines eingemessenen Zustands eines Projektionssystems erläutert.

Eine erste Optimierung kann durch Annahme einer Unveränderlichkeit bzw. einer konstanten Projektionsfläche erfolgen. Unter dieser Voraussetzung lässt sich die Interpolation der Verschiebungsvektoren, bei welcher bisher drei Koordinaten beachtet werden mussten, auf ein zweidimensionales Problem reduzieren.

Dabei werden 2D-Punkte im Projektorraum auf 2D-Verschiebungsvektoren in einem vorher definierten 2D-Tangentialraum der Projektionsfläche abgebildet. Basierend auf 2*n Datenpaaren

(xpypi, OffsetUi)
(xpypi / OffsetVi)

werden zwei Interpolationen bestimmt, um die zwei Koordinaten der Verschiebungsvektoren abzubilden, gemäß:

OffsetU(xpyp)
OffsetV(xpyp).

Eine weitere Optimierung kann durch eine Reduzierung von Messfehlern durch Ausnutzung von Redundanzen erreicht werden.

Wie bereits weiter oben beschrieben worden ist, sind Ungenauigkeiten bei der Wiederherstellung eines eingemessenen Zustands eines Projektionssystems zu erwarten durch:

- einen sehr flachen Blickwinkel der Kamera auf die Projektionsfläche
- die Ausnutzung des Kamerabildes bis in die Ecken,
- die beschränkte Auflösung der Optik der Kamera und
- Ungenauigkeiten in der Kamera-Positionsbestimmung.

Unter der Voraussetzung, dass ein auf der Projektionsfläche betrachteter Marker im Erfassungsbereich zweier zeitgleich arbeitender Kameras liegt bzw. von diesen aufgenommen wird, können die entstehenden Messfehler deutlich reduziert werden.

Eine Reduzierung eines Messfehlers kann beispielsweise dadurch erreicht werden, dass aus Markern abgeleitete Messpunkte entsprechend einem zu erwartenden Fehler bzw. einer zu erwartenden Sicherheit gewichtet werden.

Möglich ist es auch, zu ungenaue Messpunkte von einer weiteren Berechnung auszuschließen. Das Ausschließen von Messpunkten ist möglich, da das Kernkonzept darauf ausgelegt ist, mit wenigen lückenhaften Messdaten, also einer verringerten Anzahl von Messpunkten, bei der Wiederherstellung des eingemessenen Zustands eines Projektionssystems auszukommen.

Die Gesamtsicherheit der einzelnen Messpunkte kann dabei aus verschiedenen Bewertungskriterien zusammengesetzt werden. In einer Alternative kann auch ein einzelnes Bewertungskriterium ausreichend sein.

Beispielsweise kann bei einer Nutzung mehrerer Bewertungskriterien eine multiplikative Kombination der einzelnen Sicherheitsbewertungen erfolgen, bei welcher ein Wert für eine Gesamtsicherheit eines Messpunkts erzeugt wird: Gesamtsicherheit = Sicherheit1 * Sicherheit2 * ... * SicherheitN.

Ein Beispiel hierfür kann lauten:

$$\text{Gesamtsicherheit } i = \text{Sicherheit}(\text{Winkel } i) * \text{Sicherheit}(xcyc\ i) *$$
$$\text{Sicherheit}(\text{Kameraauflösung } i) * \text{Sicherheit}(\text{Kamerapositionsbestimmung } i).$$

Hierbei werden

- der Winkel der Kamera zur Projektionsfläche,
- die entzerrten Kamerakoordinaten xc und yc,
- die Auflösung der Kamera und
- die Sicherheit bei der Bestimmung der Position der Kamera in die Bestimmung der Gesamtsicherheit bei der Bewertung eines Messpunktes eingebracht.

Liegt die derart bestimmte Gesamtsicherheit i eines Messpunktes unter einer bestimmten vorgegebenen Schwelle, kann dieser Messpunkt aus der weiteren Verarbeitung ausgeschlossen bzw. verworfen werden. Liegt die derart bestimmte Gesamtsicherheit i eines Messpunktes über der vorgegebenen Schwelle, wird dieser Messpunkt bei der Wiederherstellung eines eingemessenen Zustands eines Projektionssystems genutzt.

Ist ein Messpunkt von n verschiedenen Kamerapositionen aus gemessen worden, beispielsweise bei einer gleichzeitigen Nutzung von n Kameras, können die verschiedenen Messwerte entsprechend ihrer Sicherheit kombiniert werden: Messpunkt = (Messpunkt1 * Sicherheit1 + Messpunkt2 * Sicherheit2 + ... + MesspunktN*SicherheitN) / (Sicherheit1 + Sicherheit2 + ... + SicherheitN).

Derart wird ein Messpunkt erzeugt, dessen Messfehler deutlich reduziert ist.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:

Fig. 1: eine Prinzipdarstellung einer großflächigen Projektion auf einer gewölbten Projektionsfläche mittels mehrerer Projektoren,

Fig. 2: eine beispielhafte Darstellung der Teilbilder der großflächigen Projektion,

Fig. 3: eine Projektion von Markern auf der Projektionsfläche zum Einmessen des Projektionssystems,

Fig. 4: eine auszugsweise vergrößerte Darstellung der Marker auf der Projektionsfläche aus der Fig. 3,

Fig. 5 eine Darstellung eines erzeugten 3D-Modells der Projektionsfläche mit Modellmesspunkten M und Messpunkten Q,

Fig. 6: eine Darstellung einer fehlerfreien großflächigen Projektion nach einem Einmessen des Projektionssystems,

Fig. 7: eine fehlerhafte Projektion eines Teilbilds nach einer Lageveränderung eines Projektors,

Fig. 8: eine Gegenüberstellung der Projektion von Markern auf der Projektionsfläche zum Einmessen des Projektionssystems vor und nach einer Lageveränderung eines Projektors,

Fig. 9: eine auszugsweise Gegenüberstellung der Projektion eines Markers auf der Projektionsfläche vor und nach einer Lageveränderung eines Projektors,

Fig. 10: ein Projektionssystem mit zwei Kameras zum Aufnehmen der auf der Projektionsfläche projizierten Marker,

Fig. 11: eine Darstellung einer Aufnahme eines auf die Projektionsfläche projizierten Markers mittels zweier Kameras aus verschiedenen Positionen,

Fig. 12: eine Optimierung der mittels zweier Kameras ermittelten 3D-Messpunkte $Q_{cam0}$ und $Q_{cam1}$ durch eine Mittelwertbildung,

Fig. 13: eine Optimierung der ermittelten 3D-Messpunkte durch eine Wichtung des Winkels a und

Fig. 14: eine Optimierung, bei welcher der Abstand eines Messpunktes zum Kameramittelpunkt berücksichtigt wird.

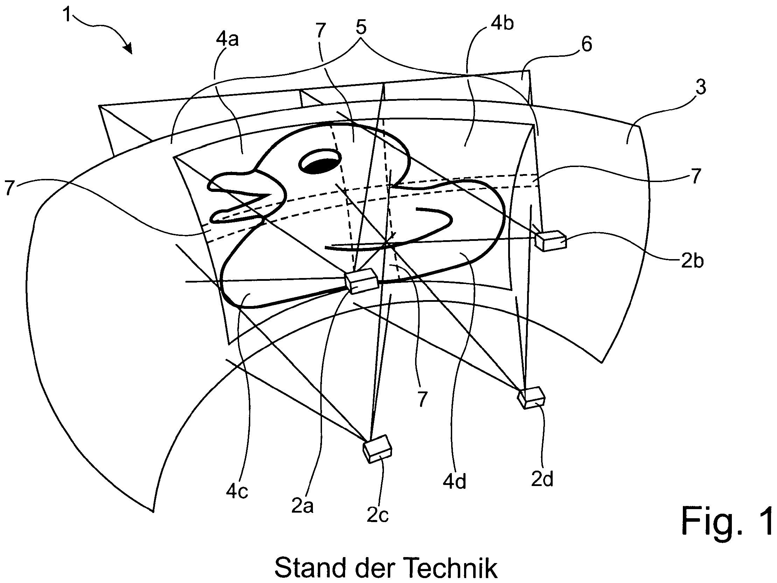

In der Fig. 1 ist ein Projektionssystem 1, welches beispielhaft vier Projektoren 2a, 2b, 2c, 2d umfasst, dargestellt. Jeder Projektor 2a, 2b, 2c, 2d erzeugt auf der Projektionsfläche 3 je ein Teilbild 4a, 4b, 4c, 4d, welche zusammengesetzt eine großflächige Projektion 5 ergeben. Die Erzeugung dieser großflächigen Projektion 5 erfolgt derart, dass zwischen zwei benachbarten Teilbildern 4a, 4b, 4c, 4d eine Blendzone 7 entsteht, in welcher sich Bildanteile der benachbarten Teilbilder 4a, 4b, 4c, 4d überlagern. Die Erzeugung der für die Ansteuerung der Projektoren 2a, 2b, 2c, 2d benötigten Bild- oder Videosignale der Teilbilder 4a, 4b, 4c, 4d erfolgt in einer geeigneten zentralen Signalerzeugungseinheit, welche hier nicht näher beschrieben wird, da sie keinen Einfluss auf die Ausführungen zur vorliegenden Erfindung hat.

Die Erzeugung der benötigten Teilbilder 4a, 4b, 4c, 4d erfolgt in der Signalerzeugungseinheit ursprünglich derart, dass die großflächige Projektion 5 nur auf einer ebenen Projektionsfläche 6, welche in der Fig. 1 nur zur besseren Veranschaulichung dargestellt ist, ohne Fehler in der Darstellung projiziert werden kann.

Um eine fehlerfreie Darstellung auf der gekrümmten Projektionsfläche 3 zu ermöglichen, wird das gesamte Projektionssystem 1 eingemessen. Bei diesem Einmessen werden Daten erzeugt, welche es ermöglichen, die Teilbilder 4a, 4b, 4c, 4d derart zu verzerren, dass diese auf der gekrümmten Projektionsfläche 3 für einen Betrachter derartig dargestellt werden, dass sie von einem Betrachter originalgetreu, ohne unerwünschte Verschiebungen oder Verzerrungen, wahrgenommen werden. Neben dieser Verzerrung der Teilbilder 4a, 4b, 4c, 4d werden die Signale der Teilbilder 4a, 4b, 4c, 4d auch derart verändert, dass diese in den Blendzonen 7 so genau überlagert werden, dass der Betrachter die Teilbilder 4a, 4b, 4c, 4d nicht mehr einzeln oder getrennt voneinander wahrnehmen kann und eine zusammenhängende großflächige Projektion 5 erscheint. Hierzu ist auch das Blending, also eine Anpassung der Helligkeit der Teilbilder 4a, 4b, 4c, 4d innerhalb der Blendzonen 7, vorzunehmen.

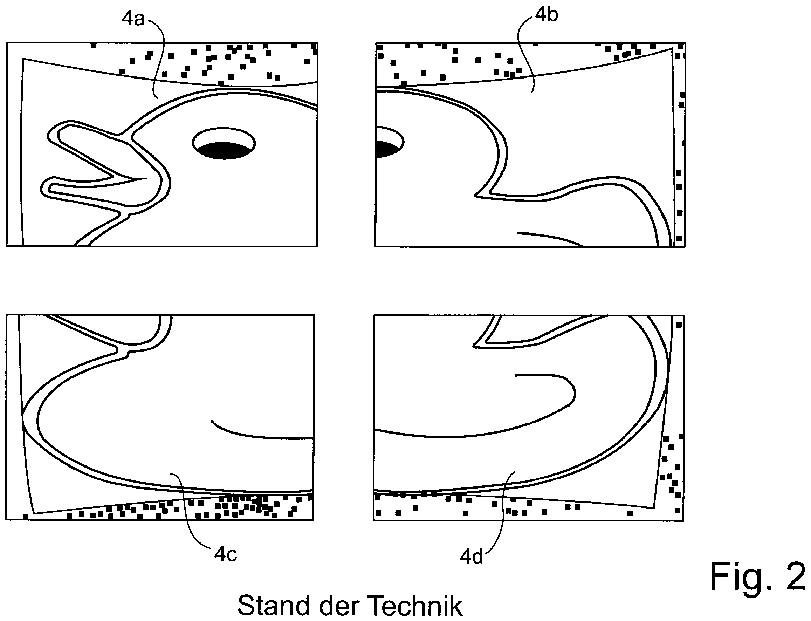

In der Fig. 2 sind die Teilbilder 4a, 4b, 4c, 4d der großflächigen Projektion 5 in jeweils einzelnen Abbildungen dargestellt. Deutlich zu erkennen ist beispielsweise an den Teilbildern 4a und 4b, dass die Teilbilder 4a und 4b an ihrer gemeinsamen Seite nur zum Teil übereinander geschoben eine fehlerfreie Abbildung bewirken können. Im Beispiel der Teilbilder 4a und 4b ist deutlich zu erkennen, dass das Auge der dargestellten Ente in eine Übereinstimmung gebracht werden muss, um eine fehlerfreie großflächige Projektion 5 zu erhalten.

Die Einrichtung und der Betrieb eines Projektionssystems 1 erfolgt beispielsweise in folgenden Schritten:

1. Aufmaß
2. Projektionsdesign
3. Aufbau
4. Einmessen (Alignment)
5. Einrichtung
6. erneutes/rückführendes Einmessen (Realignment).

Als Aufmaß wird die Vermessung der zur Projektion genutzten Projektionsfläche 3 und die Bestimmung von möglichen Positionen der zur Projektion der großflächigen Projektion 5 benötigten Projektoren 2 bezeichnet. Aus diesem Aufmaß wird ein erstes konstruktives Modell des Projektionssystems 1 erstellt. Aufbauend auf diesem erstellten ersten konstruktiven Modell des Projektionssystems 1 wird ein Projektionsdesign erstellt. Anhand dieses erstellten Projektionsdesigns können Vorgaben wie ein Projektortyp, eine Auflösung, mögliche Optiken und die Helligkeit bestimmt sowie überprüft werden. Erfüllt das Projektionsdesign die für das Projektionssystem vorgegebenen Kriterien, wird das Modell des Projektionssystems 1 in der Praxis umgesetzt, also der Aufbau in der Praxis realisiert.

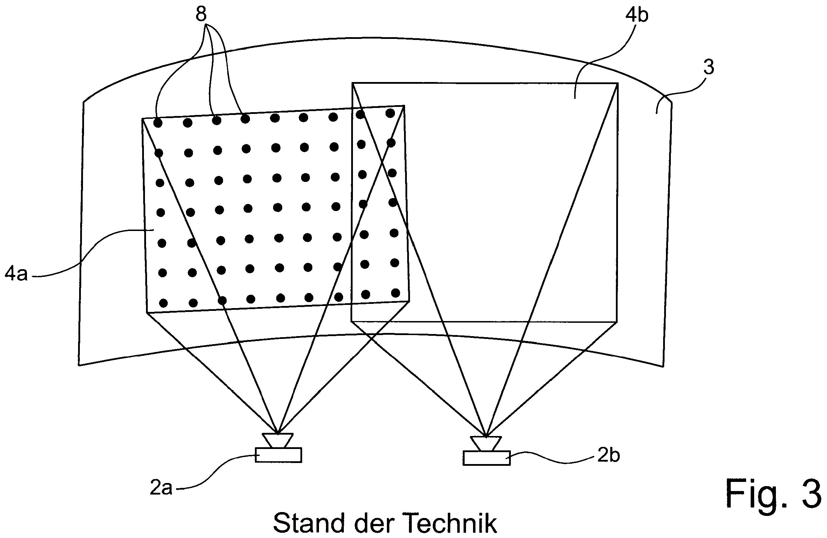

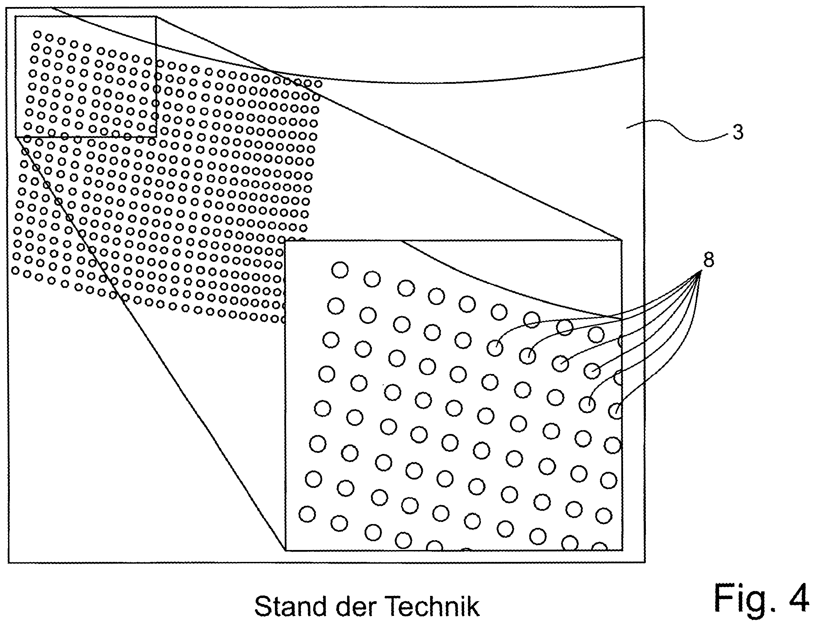

Nachdem das Projektionssystems 1 in der Praxis aufgebaut und final eingerichtet ist sowie alle Bildsignale stabil übertragen werden, kann mit einem Einmessen (Alignment) des Projektionssystems 1 begonnen werden. Die Übertragung der Bildsignale kann beispielsweise mittels Standards wie DVI, HDMI oder DisplayPort erfolgen. Für diesen Vorgang des Einmessens (Alignment) werden m mal n Marker 8, wie beispielsweise Kreise oder Kreuze, pro Projektor 2a, 2b, 2c, 2d auf die Projektionsfläche 3 projiziert, wie in der Fig. 3 dargestellt ist. Hierbei entspricht m beispielsweise einer Anzahl der in einer Zeile projizierten Marker 8, während n die Anzahl der Zeilen der Marker 8 in einer m mal n Matrix angibt. Im Beispiel der Fig. 3 sind die Marker 8 in 7 Zeilen zu je 9 Markern 8 je Zeile dargestellt. Somit sind diesem Beispiel $m = 9$ und $n = 7$. Diese in einer Matrix projizierten Marker 8 werden beispielsweise durch einen Graycode eindeutig indiziert und mittels einer Kamera erfasst. Unter der Voraussetzung, dass bereits ein erstelltes 3D-Modell der Projektionsfläche 3 vorhanden ist, können diese Marker 8 in einen Messpunkt 9 Q überführt werden. Diese Messpunkte 9 Q weisen eine bestimmte Position mit jeweils einer X-, Y- und Z-Koordinate auf der Projektionsfläche 3 auf. Eine beispielhafte Darstellung derartiger Marker 8, beispielsweise eines Projektors 2a, ist in der Fig. 3 in einer Übersicht und in der Fig. 4 in einer vergrößerten auszugsweisen Darstellung gezeigt. Die Fig. 4 zeigt im rechten unteren Bereich eine Vergrößerung eines Ausschnitts der Projektionsfläche 3 aus dem linken oberen Teil der Fig. 4.

Es wird zunächst für jede Kameraposition die Position und Orientierung der Kamera 12 in einem sogenannten Weltkoordinatensystem anhand von Festpunkten berechnet. Festpunkte sind markante Punkte im Sichtbereich der Kamera(s) 12, deren Positionen im Weltkoordinatensystem zuvor bestimmt worden sind. Dies kann beispielsweise mit Hilfe eines Theodoliten, Disto's oder mittels einer Photogrammmetrie erfolgen.

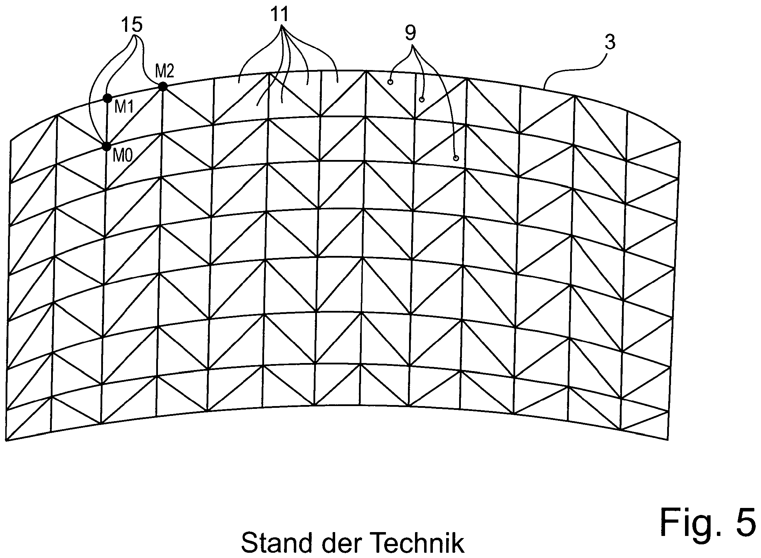

Durch je eine Aufnahme eines projizierten Markers 8 mittels einer in dem Projektionssystem 1 angeordneter Kamera 12 aus beispielsweise zwei verschiedenen Positionen werden mittels eines sogenannten Vorwärtsschnitts die 3D-Koordinaten eines Messpunkts 9 Q ($Q_n$, $Q_1$, $Q_2$, ... , $Q_n$) aus dem Marker 8 errechnet. Vorteilhafterweise können auch zwei Kameras 12a und 12b im Projektionssystem 1 angeordnet werden, wobei beispielsweise ein gleichzeitiges Aufnehmen eines Markers 8 aus zwei verschiedenen Positionen erfolgen kann. Mithilfe dieser errechneten Messpunkte 9 Q ($Q_n$, $Q_1$, $Q_2$, ... , $Q_n$) kann ein 3D-Modell der Projektionsfläche 3 erstellt und im weiteren Verfahrensablauf genutzt werden. Jeder dieser Messpunkte 9 Q weist eine eigene X-, Y- und Z-Koordinate auf und kann somit sowohl auf der Projektionsfläche 3 wie auch in dem von der Projektionsfläche 3 abgeleiteten 3D-Modell eindeutig dargestellt werden. Zur Reduzierung der Anzahl der zur Beschreibung der Oberfläche der Projektionsfläche 3 im 3D-Modell benötigten Anzahl von Messpunkten 9 Q wurde die Oberfläche im Modell in Teilflächen 11 eingeteilt oder zerlegt. Diese Teilflächen 11, welche beispielsweise Dreiecke oder andere Vielecke sein können, werden jeweils durch drei oder mehr Eckpunkte oder Modellmesspunkte 15 M gebildet und beschreiben die Oberfläche der Projektionsfläche 3 hinreichend genau. Eine derartige Darstellung eines aus beispielsweise Dreiecken 11 aufgebauten 3D-Modells der Projektionsfläche 3 ist in der Fig. 5 dargestellt. Die Darstellung zeigt beispielhaft ein Dreieck 11 mit den Eckpunkten $M_0$, $M_1$ und $M_2$.

Die mittels einer Triangulation gewonnen 3D-Koordinaten des dreidimensionalen Modells (3D-Modell) der Projektionsfläche 3 bilden die reale Projektionsfläche 3 hinreichend genau nach und unterscheiden sich meist von einer idealen ebenen Projektionsfläche 6.

Ein im vorliegenden Verfahren notwendiges 3D-Modell kann somit, wie bereits oben in einer ersten Variante beschrieben, aus den auf die Projektionsfläche 3 projizierten Markern 8 abgeleitet werden.

Alternativ kann in einer zweiten Variante angenommen werden, dass die Projektionsfläche 3 in ihrem Bereich einer Teilfläche einer Kugel oder eines Zylinders entspricht und ein entsprechendes 3D-Modell einer Kugel oder eines Zylinders genutzt werden.

Eine dritte Variante zur Erzeugung eines 3D-Modells der Projektionsfläche 3 besteht darin, dass die Projektionsfläche 3 mittels eines Laserscanners oder eines Theodoliten punktgenau vermessen oder gescannt wird.

Außerdem ist es vorgesehen, dass jeder Projektor 2a, 2b, 2c, 2d einmalig eingemessen wird, um die Teilbilder jedes Projektors 2a, 2b, 2c, 2d in Form einer Teilfläche auf der Projektionsfläche 3 zuordnen zu können.

Der nächste Schritt ist die Einrichtung der Gesamtprojektion. Prinzipiell werden zwei Anwendungsfälle unterschieden:

1. Simulation einer 3D-Umgebung

Einrichtung des Betrachtungspunks (Eyepoint), der Orientierung und des Öffnungswinkels (Frustum) der virtuellen Kamera(s), welche am Betrachtungspunkt positioniert wird bzw. werden.

2. Video

Einrichtung des Mappingkoordinatensystems und Einstellen der Lage und der Orientierung der einzelnen Bildausschnitte (cutting rectangles) pro Projektor.

Ausgehend von

- Betrachtungspunkt, Orientierung und Öffnungswinkel der virtuellen Kamera oder
- Mappingkoordinatensystem, Lage und Orientierung der Bildausschnitte, werden 2 Transformationen berechnet:

$$_pk_m(\text{Projektorkoordinaten -> Mappingkoordinaten})$$
$$_mk_p(\text{Projektorkoordinaten <- Mappingkoordinaten}).$$

Bei der Bestimmung der Transformationen $_pk_m$ und $_mk_{p'}$ welche auch als Transformationsbestimmung bzw. Interpolationsbestimmung bezeichnet werden, werden aus bekannten Koordinaten-Paaren, wie beispielsweise xpypi und uvi in den verschiedenen Koordinatensystemen (Projektorkoordinaten, Mappingkoordinaten) verallgemeinernd Interpolationen bestimmt, mit denen die Transformationsfunktion $_pk_m$ und $_mk_p$ für beliebige Koordinaten geschätzt werden kann. Hierfür kommen übliche Interpolationsverfahren, wie Polynome oder Kubische Splines zum Einsatz. Diese Interpolationsverfahren kommen der tatsächlichen Übertragungsfunktion sehr nah, wenn entsprechend dichte Messpunkte vorhanden sind und die Funktion dazwischen stetig ist. Je weiter die Messpunkte voneinander entfernt sind bzw. außerhalb des Messbereichs wird die Schätzung schlechter.

Mit beiden Transformationen in Folge können Projektorkoordinaten in Mappingkoordinaten ($_pk_m$) und Mappingkoordinaten in Projektorkoordinaten ($_mk_p$) transformiert werden. Diese beiden Transformationen bilden die Grundlage für alle nachfolgenden Berechnungen.

Als Blendzone 7 wird der Bereich oder die Überlappungszone beispielsweise zwischen den einzelnen Teilbildern 4a und 4b der einzelnen Projektoren 2a und 2b bezeichnet. Für beide Anwendungsfälle (Simulation einer 3D-Umgebung oder Video) wird das Blending in einem Mappingkoordinatensystem berechnet. Entsprechend werden die Grauwerte des Blendings pro Einzelprojektion berechnet.

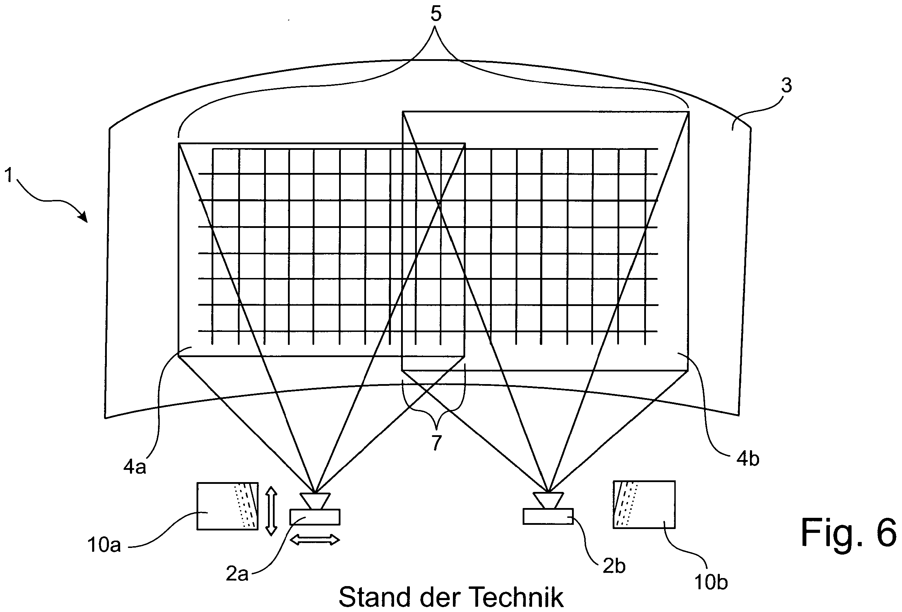

Nach dem Einmessen und der Einrichtung der Projektion ergibt sich je nach Anwendungsfall (Simulation einer 3D-Umgebung oder Video) eine zusammenhängende großflächige Projektion 5. Ein Beispiel für ein derart bereitgestelltes Projektionssystem ist in der Fig. 6 dargestellt. Die Fig. 6 zeigt ein Projektionssystem 1 mit zwei Projektoren 2a und 2b, welche die Teilbilder 4a und 4b erzeugen. Die Projektoren 2a und 2b sind durch das Einmessen und Einrichten des Projektionssystems 1 derart ausgerichtet und eingestellt worden, dass die von ihnen projizierten Teilbilder 4a und 4b auf der Projektionsfläche 3 eine großflächige Projektion 5 erzeugen, in welcher der Übergang zwischen den Teilbildern 4a und 4b in der Blendzone 7 nicht mehr erkannt werden kann. In der Fig. 6 sind beispielhaft auch die zur Projektion der Teilbilder 4a und 4b genutzten Blendmasken 10a und 10b dargestellt, welche im Strahlengang des jeweiligen Projektors 2a und 2b angeordnet sein können. Die Fig. 6 zeigt eine von beiden Projektoren 2a und 2b auf der Projektionsfläche 3 erzeugte Darstellung eines Gitters.

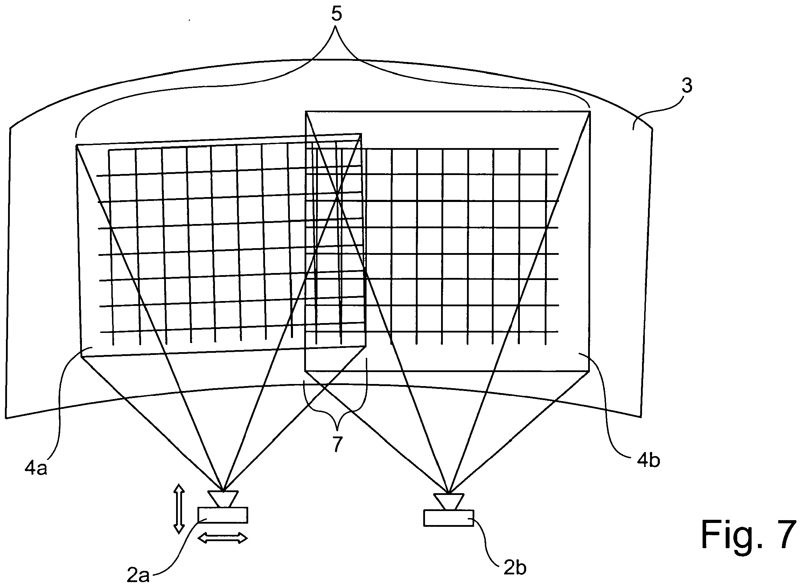

Durch einen in einem Projektor 2 notwendigen Lampenwechsel, thermischen Drift oder andere äußere Einflüsse kann es zu einer Veränderung der Position und/oder der Orientierung eines oder mehrerer Projektoren 2a, 2b, 2c, 2d kommen. Diese teilweise nur minimalen Veränderungen sind in der großflächigen Projektion 5 beispielsweise durch Doppelbilder sichtbar. Eine derart veränderte Projektion ist in der Fig. 7 gezeigt. Im Beispiel der Fig. 7 ist der linke Projektor 2a in seiner Lage verschoben worden. Dies Veränderung der Position des Projektors 2a führt zu einer in seiner Ausrichtung und/oder Lage geänderten Projektion des Teilbilds 4a. In der Fig. 7 ist dies insbesondere in der Blendzone 7 der großflächigen Projektion 5 an einem nicht mehr übereinstimmenden Gittermuster der Teilbilder 4a und 4b zu erkennen.

Durch ein erneutes oder rückführendes Einmessen bzw. Realignment des Projektionssystems 1 muss der Zustand der ursprünglichen Einmessung und Einrichtung wieder hergestellt werden. Hierfür sind folgend Voraussetzungen und Schritte notwendig:

- Mittels einer Triangulation gewonnene 3D-Koordinaten (Messpunkte $M_0$, $M_1$, $M_2$, ... , $M_n$) des dreidimensionalen Modells (3D-Modell) der Projektionsfläche 3 oder alternativ ein anderes 3D-Modell der Projektionsfläche 3 in einer genügend hohen Genauigkeit. Eine Erzeugung eines derartigen in der Fig. 4 dargestellten 3D-Mdells wurde bereits weiter oben beschrieben.
- Ein genügend großer Teil der Projektionsfläche 3 wird durch mindestens eine oder mehrere Kameras eingesehen. Hierbei muss gewährleistet sein, dass die Teilbilder 4a, 4b, 4c, 4d der Projektoren 2a, 2b, 2c, 2e zumindest teilweise von mindestens einer Kamera 12 gesehen werden. Dabei ist es vorteilhaft, wenn die Position und Orientierung der einen oder mehreren Kameras bereits bekannt sind. Alternativ kann die Position und die Orientierung in einem separaten Verfahrensschritt ermittelt werden.

Das erneute Einmessen oder Realignment des Projektionssystems 1 kann nachfolgend in mehreren Verfahrensschritten durchgeführt werden:
In einem ersten Verfahrensschritt erfolgt eine Berechnung der Position und Orientierung der (Realignment) Kamera(s) innerhalb des Projektionssystems 1 für den Fall, dass diese Angaben noch nicht vorliegen. Hierzu werden sogenannte Festpunkte verwendet, welche im Erfassungsbereich einer Kamera liegen und deren Lage in einem sogenannten Weltkoordinatensystem (Ursprungskoordinatensystem) mit zugehörigen X-, Y- und Z-Koordinaten bekannt ist. Als Festpunkte können LEDs, Laserpunkte, codierte Marker oder markante Objekte innerhalb des Erkennungsbereichs der Kamera genutzt werden. Diese werden von der Kamera detektiert, und anhand dieser Festpunkte kann die Position und Orientierung der Kamera berechnet werden.

In einem zweiten Verfahrensschritt erfolgt eine erneute Projektion und Erkennung der eindeutig indizierten Marker 8 pro Projektor 2a, 2b, 2c, 2d und pro im Bereich des Projektionssystems 1 angeordneter Kamera.

Wird ein Multikamerasystem mit mindestens zwei Kameras verwendet, sieht jede Kamera beispielsweise nur einen Teil der Projektion. Die Projektoren 2a, 2b, 2c, 2d, welche diese Teilbilder 4a, 4b, 4c, 4d erzeugen, müssen die entsprechenden Muster der Marker 8 projizieren, siehe beispielsweise Fig. 3 und Fig. 4.

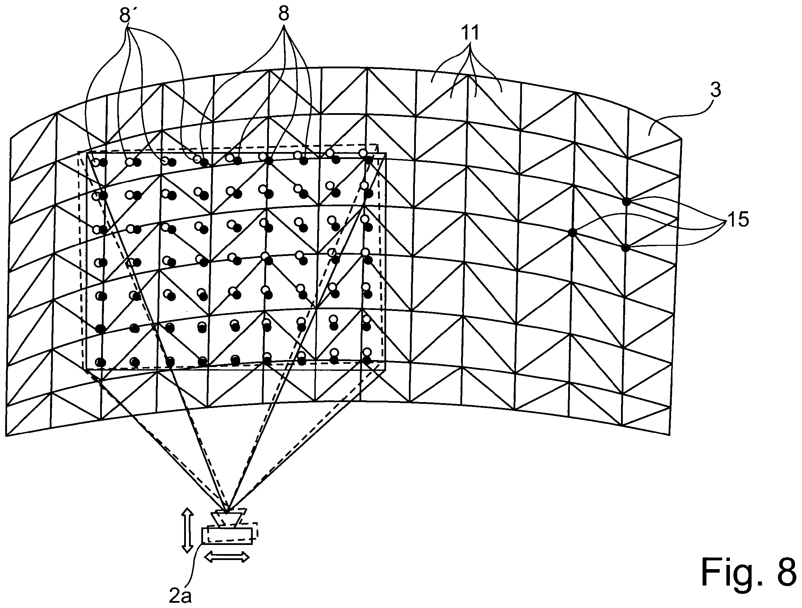

Ein Beispiel für eine Projektion von Mustern oder Markern 8 auf einer Projektionsfläche 3 in einem originalen und einem verschobenen Zustand, in welchem sich die Lage des Projektors 2 verändert hat, ist in der Fig. 8 dargestellt. Während die ursprünglichen Marker 8 mit dem Bezugszeichen einer 8 gekennzeichnet sind, wurden die durch die Lageänderung des Projektors 2a erzeugten verschobenen Marker 8'mit einem hochgestellten "'" gekennzeichnet.

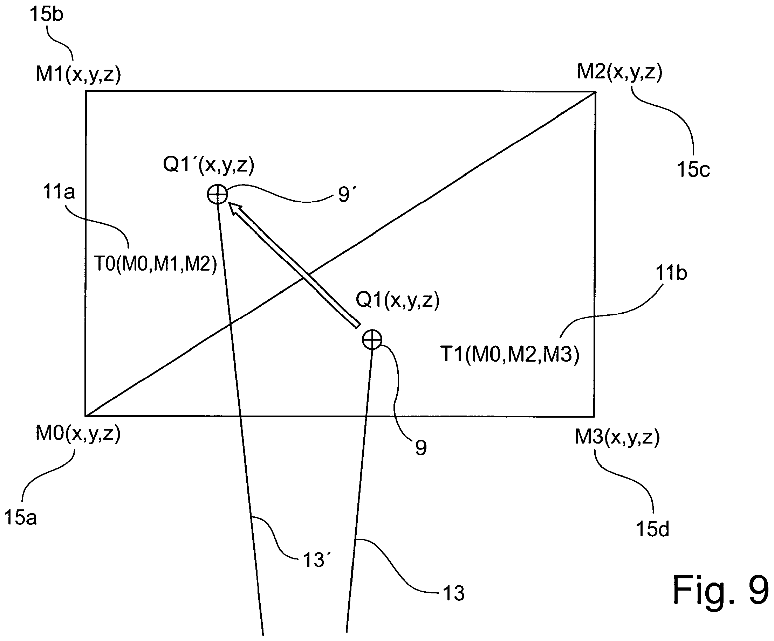

In der Fig. 9 ist eine auszugsweise Darstellung eines Markers aus der Fig. 8 gezeigt. Gemäß dem in der Fig. 5 gezeigten Modell, sind zur Erklärung nur zwei Teilflächen 11a und 11b dargestellt. Die erste Teilfläche 11a, bezeichnet mit $T_0$, wird durch die Modellpunkte 15 mit der Bezeichnung $M_0$, $M_1$ und $M_2$ gebildet. Die zweite Teilfläche 11b, bezeichnet mit $T_1$, wird durch die Modellpunkte 15 mit der Bezeichnung $M_0$, $M_2$ und $M_3$ gebildet.

Dargestellt ist ein Messpunkt Q1, welcher X-, Y- und Z-Koordinaten aufweist und aus dem Marker 8 detektiert worden ist. Weiterhin dargestellt ist ein Messpunkt $Q_1$' 9, welcher mit abweichenden X-, Y- und Z-Koordinaten aus dem Marker 8' detektiert worden ist, bedingt durch die Lageveränderung des Projektors 2a. Die resultierende Veränderung der detektierten Lage der Messpunkte $Q_1$ und $Q_1$' ist mittels des Pfeils dargestellt. Dargestellt ist auch der ursprüngliche Sichtstrahl 13 einer Kamera 12 auf den Marker 8 sowie der veränderte Sichtstrahl 13' der Kamera 12 auf den Marker 8' nach der Lageveränderung des Projektors 2a.

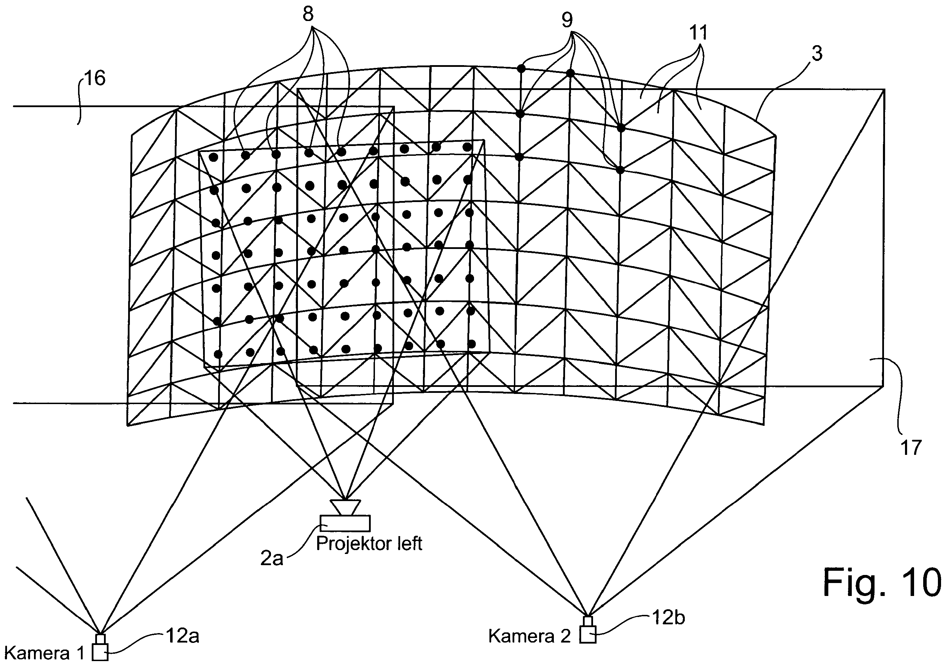

Ein Beispiel für ein Projektionssystem 1, in welchem beispielhaft zwei Kameras 12a und 12b installiert sind, zeigt die Fig. 10. Die Kameras 12a und 12b sind mit ihrem Erfassungsbereich 16 bzw. 17, also ihrer Orientierung, auf die Projektionsfläche 3 ausgerichtet und ermöglichen mindestens eine zumindest teilweise Aufzeichnung oder Aufnahme dieser Projektionsfläche 3.

Derart wird eine gegenüber der erstmaligen Einmessung reduzierte Anzahl von Messpunkten Q' erzeugt, welche für die Wiederherstellung eines eingemessenen Zustands eines Projektionssystems zur Verfügung steht. Zur Bestimmung der Punktepaare der Messdaten wird nun für die reduzierte Anzahl der Messpunkte je ein dreidimensionaler Offset der erneuten Einmessung bestimmt:

$$OffsetXYZi = XYZi' - XYZi.$$

Basierend auf 3*n Datenpaaren gilt:

(XYZi, OffsetXi)
(XYZi, OffsetYi)
(XYZi, OffsetZi).

Nachfolgend werden drei Interpolationen gemäß:

OffsetX(XYZ)
OffsetY(XYZ)
OffsetZ(XYZ)

bestimmt, um die drei Koordinaten eines Verschiebungsvektors zu schätzen.

Mit dieser bestimmten Offset-Funktion lässt sich zu jedem Punkt XYZ der Originaldaten ein geschätzter Punkt XYZ' für den aktuellen Zeitpunkt wie folgt berechnen:

$$X' = X + OffsetX(XYZ) \quad Y' = Y + OffsetY(XYZ) \quad Z' = Z + OffsetZ(XYZ).$$

Da die Originaldaten für jeden gemessenen Punkt auch die Position im Projektorraum enthalten haben, lassen sich nun Punktepaare (xpypi, XYZi') wie folgt berechnen:

(xpypi, XYZi + Offset(XYZi)).

Basierend auf den neu bestimmten Punktepaaren (xpypi, XYZi'), lassen sich alle erforderlichen Korrekturdaten äquivalent zu einer erstmaligen Einmessung ableiten.

Derart werden korrigierte Transformationen $_pk_m$ und $_mk_p$ zur Erzeugung der Teilbilder 4a, 4b, 4c, 4d für jeden Projektor 2a, 2b, 2c, 2d bereitgestellt.

Nach abgeschlossenem erneuten oder rückführenden Einmessen oder Realignment des Projektionssystems 1 ist der in der Fig. 6 gezeigte Zustand einer fehlerfreien Projektion der großflächigen Projektion 5 wieder hergestellt.

Für den Fall, dass die gesamte Projektionsfläche 3 nicht ausreichend durch eine Kamera 12 eingesehen werden kann, muss man entweder mit einer Kamera 12 Aufnahmen von verschiedenen Positionen innerhalb des Projektionssystems 1 machen oder mehrere Kameras 12a und 12b, die sich an verschiedenen Positionen befinden, verwenden. Als Lage der Kameras 12 innerhalb des Projektionssystems 1 kommen Positionen für die Kameras 12 in Frage, von welchen aus der entsprechende Ausschnitt der Projektionsfläche 3 hindernisfrei erfasst werden kann. Beispielsweise kann eine Kamera 12 neben oder schräg hinter einem Projektor im Projektionssystem 1 angeordnet werden, wie dies beispielhaft in der Fig. 10 gezeigt ist.

Da die Berechnung der Position sowie der Orientierung der Kameras nach der ersten Variante in den meisten Fällen aufgrund auftretender Toleranzen nicht genau genug ist, können verschiedene Strategien zur Optimierung der ermittelten Größen und somit zur Optimierung der Projektion Anwendung finden. Jede dieser Optimierungen kann alleine oder auch in Kombination zur Anwendung kommen.

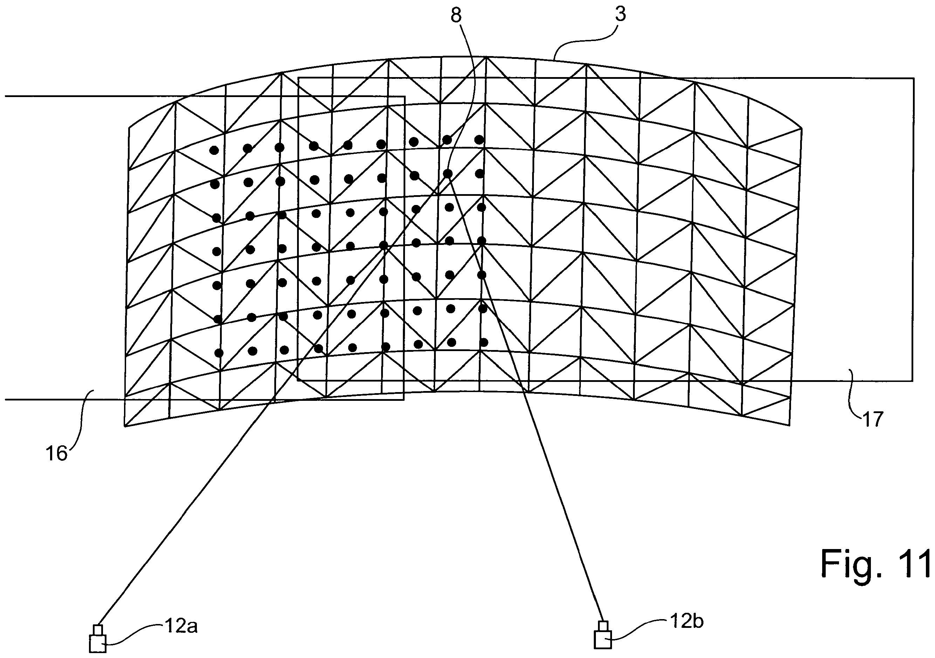

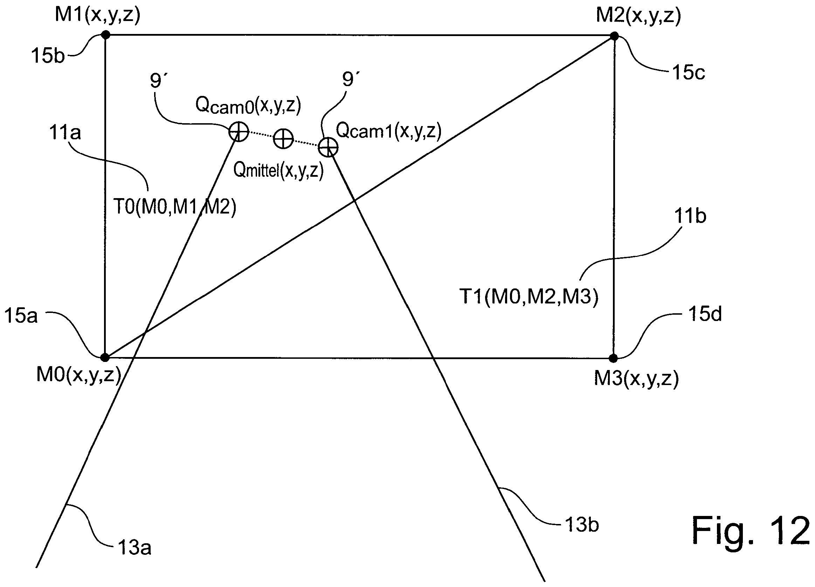

Wird ein Marker 8 mit einer oder zwei Kameras von zwei Positionen aus detektiert, wie es in der Fig. 11 gezeigt ist, so wird in einer ersten Optimierung ein Mittelwert dieser beiden detektierten 3D-Koordinaten $Q_{cam0(x, y, z)}$ und $Q_{cam1(x, y, z)}$ gebildet. Dies kann beispielsweise durch eine arithmetische Mittelwertbildung erfolgen, bei welcher der Mittelwert $Q_{mittel(x, y, z)}$ gebildet wird. Bei dieser Mittelwertbildung von $Q_{mittel(x, y, z)}$ werden die unterschiedlichen 3D-Koordinaten $Q_{cam0(x, y, z)}$ und $Q_{cam1(x, y, z)}$ abgeleitet, aus einem Marker 8 addiert und durch die Anzahl der detektierten 3D-Koordinaten geteilt. Die derart gebildete Mittelwert-3D-Koordinate $Q_{mittel(x, y, z)}$ des einen Markers 8 wird nachfolgend verwendet. Eine derartige Optimierung mittels einer Mittelwertbildung ist in der Fig. 12 dargestellt.

In der Fig. 12 ist ein Ausschnitt der Projektionsfläche 3 mittels zweier den Ausschnitt beschreibender Teilflächen 11a (To) und 11b ($T_1$) gezeigt. Hierbei wird die erste dreieckförmige Teilfläche 11a durch die Modellpunkte M0, M1 und M2 und die zweite dreieckförmige Teilfläche 11b durch die Modellpunkte M0, M2 und M3 gebildet. Ein beispielsweise im Bereich der ersten Teilfläche 11a projizierter Marker 8 wird von der ersten Kamera 12a, gemäß ihrem dargestellten Sichtstrahl 13a, an dem Messpunkt $Q_{cam0(x, y, z)}$ detektiert. Der gleiche Marker 8 wird von der zweiten Kamera 12b, gemäß ihrem dargestellten Sichtstrahl 13b, an dem Messpunkt $Q_{cam1(x, y, z)}$ detektiert. Gemäß der beschriebenen Optimierung über eine Mittelwertbildung wird der Messpunkt $Q_{mittel(x, y, z)}$ berechnet, welcher zwischen den Messpunkten $Q_{Cam0(x, y, z)}$ und $Q_{cam1(x, y, z)}$ liegt, wie in der Fig. 12 dargestellt ist.

Eine weitere Möglichkeit der Optimierung besteht darin, eine Entscheidung darüber, mit welcher der von den Kameras 12a und 12b erfassten 3D-Koordinate eines Markers 8 nachfolgend gearbeitet werden soll, von einer Wichtung einer Position der jeweiligen Kamera 12a oder 12b abhängig zu machen.

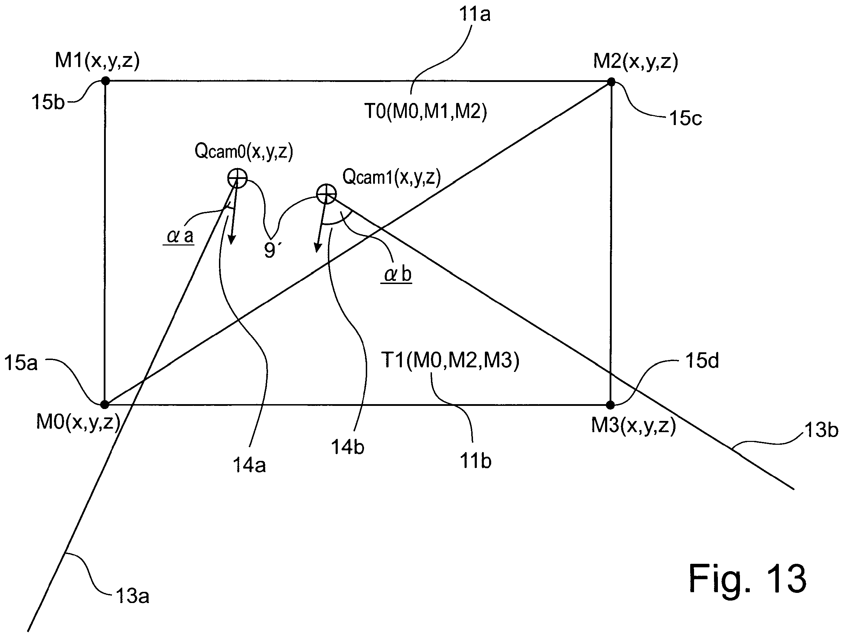

Das Kriterium bei dieser Wichtung ist der Winkel $\alpha_a$ 14a oder $\alpha_b$ 14b, welcher sich zwischen dem jeweiligen Sichtstrahl 13a der Kamera 12a oder dem Sichtstrahl 13b der Kamera 12b und der Projektionsfläche 3 ergibt, wie in der Fig. 13 gezeigt ist.

In der Fig. 13 ist wieder ein Ausschnitt der Projektionsfläche 3 mittels zweier den Ausschnitt beschreibender Teilflächen 11a und 11b gezeigt. Hierbei wird die erste dreieckförmige Teilfläche 11a durch die Modellpunkte M0, M1 und M2 und die zweite dreieckförmige Teilfläche 11b durch die Modellpunkte M0, M2 und M3 gebildet.

Bei dieser weiteren Optimierung gilt, je geringer der Winkel $\alpha$ ist, desto ungenauer wird die Berechnung des Messpunkts 9. Eine derartige Optimierung mittels einer Wichtung des Winkels a 14 ist in der Fig. 13 mithilfe eines Sichtstrahls 13a der Kamera 12a und eines Sichtstahls 13b der Kamera 12b dargestellt. Wie zu erkennen ist, ergibt sich für den Sichtstrahl 13a ein kleinerer Winkel $\alpha_a$ 14a als für den Sichtstahl 13b mit dem Winkel $\alpha_b$ 14b. Somit wird der von der Kamera 12a detektierte Messpunkt 9 $Q_{cam0(x, y, z)}$ mit einer höheren Genauigkeit bewertet und für nachfolgende Berechnungen verwendet.

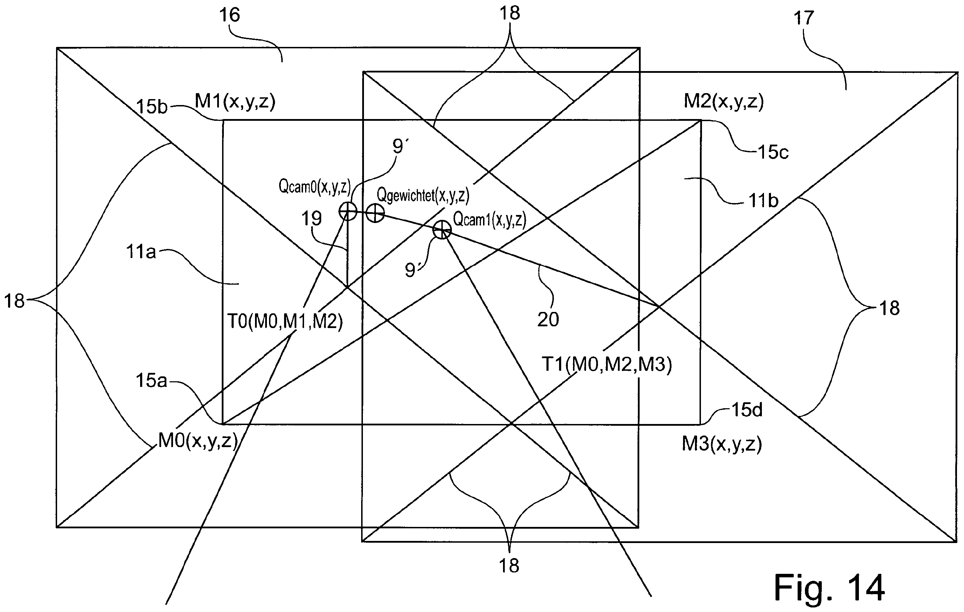

Die Güte der mit den Kameras 12a und 12b aufgenommenen Kamerabilder nimmt zum Bildrand hin stark ab, was auch durch die Kalibrierung der Kamera 12a und 12b nicht abgefangen werden kann. In Überlappungsbereichen der Kameras 12a und 12b kann deshalb der Abstand eines Messpunktes Q 9 zum Zentrum des Kamerabildes als Wichtung für die jeweilige Kamera 12a und 12b mit einfließen. Damit ergibt sich ein weicher Übergang in den sich überlappenden Aufnahmebereichen der Kameras 12a und 12b. Diese Optimierung ist in der Fig. 14 dargestellt. Infolge dieser Optimierung werden sogenannte harte Sprünge in der Projektion innerhalb der großflächigen Projektion 5 vermieden.

In der Fig. 14 ist wiederum ein Ausschnitt der Projektionsfläche 3 mittels zweier den Ausschnitt beschreibender Teilflächen 11a und 11b gezeigt. Hierbei wird die erste dreieckförmige Teilfläche 11a durch die Modellpunkte M0, M1 und M2 und die zweite dreieckförmige Teilfläche 11b durch die Modellpunkte M0, M2 und M3 gebildet. Weiterhin dargestellt sind der Erfassungsbereich 16 der ersten Kamera 12a und der Erfassungsbereich 17 der zweiten Kamera 12b, welche sich teilweise überlappen. Die Erfassungsbereiche 16 und 17 weisen jeweils zwei Diagonalen 18 auf, welche in ihrem Schnittpunkt das Zentrum des jeweiligen Erfassungsbereichs 16 und 17 angeben.

Im Beispiel wurde mittels der ersten Kamera 12a ein auf die Projektionsfläche 3 projizierter Marker 8 im Messpunkt 9 $Q_{cam0(x, y, z)}$ detektiert. Mittels der zweiten Kamera 12b wird der gleiche Marker 8 im Messpunkt $Q_{cam1(x, y, z)}$ detektiert. Nachfolgend wird der jeweilige Abstand des ermittelten Messpunkts 9 $Q_{cam0(x, y, z)}$ und $Q_{cam1(x, y, z)}$ zum Schnittpunkt im Zentrum der zugehörigen Kamera 12a und 12b ermittelt. Wie in der Fig. 14 dargestellt ist, ergibt sich ein erster Abstand 19, welcher die Entfernung zwischen dem Schnittpunkt im Zentrum des Erfassungsbereichs 16 der ersten Kamera 12a und dem Messpunkt $Q_{cam0(x, y, z)}$ darstellt, und ein zweiter Abstand 20, welcher die Entfernung zwischen dem Schnittpunkt im Zentrum des Erfassungsbereichs 17 der zweiten Kamera 12b und dem Messpunkt $Q_{cam1(x, y, z)}$ darstellt.

Da der ermittelte Abstand 19 wesentlich kleiner als der ermittelte Abstand 20 ist, wird davon ausgegangen, dass der Messpunkt 9 $Q_{cam0(x, y, z)}$ mit einer größeren Genauigkeit ermittelt wurde, da er näher im Zentrum der zugehörigen Kamera 12a erfasst worden ist. Der Messpunkt 9 $Q_{cam0(x, y, z)}$ erhält somit eine erhöhte Wichtung.

Beispielsweise durch eine geeignete Wichtung der ermittelten Abstände 19 und 20 kann ein gewichteter Messpunkt 9 $Q_{gewichtet(x, y, z)}$ gebildet werden. Im Beispiel der Fig. 14 wurde eine erhöhte Wichtung von 80 % für den ersten Abstand 19 und 20 % für den zweiten Abstand 20 angenommen und derart der dargestellte Messpunkt 9 $Q_{gewichtet(x, y, z)}$ errechnet.

Die zwei nachfolgend beschriebenen Vorgänge bei der Erzeugung einer großflächigen Projektion 5 lassen sich auch mittels des beschriebenen Verfahrens zur automatischen Wiederherstellung eines eingemessenen Zustands eines Projektionssystems vorteilhaft umsetzen.

Bereiche außerhalb der eingemessenen Projektion:

Beim erneuten oder rückführenden Einmessen (Realignment) können durch eine Kamera nicht einsehbare Bereiche extrapoliert werden. Dies ist möglich, da beispielsweise angenommen werden kann, dass sich die Projektion in dem nicht einsehbaren Bereich nur leicht transformiert hat. In diesem Fall können modifizierte Daten der originalen Einmessung herangezogen werden.

Optional kann davon ausgegangen werden, dass der nicht einsehbare Bereich zwischen den letzten einsehbaren und ermittelten Messpunkten 9 Q in der Form einer ebenen Fläche verläuft. Für die meisten Projektionen ist diese Annahme für einen in seiner Erstreckung beschränkten Bereich hinreichend genau.

In einer weiteren Option kann der Verlauf der Projektionsfläche 3 bzw. ein von dieser abgeleitetes Modell hinreichend genau durch eine Teilfläche eines Zylinders oder einer Kugel abgebildet werden. Für diesen Fall kann der nicht einsehbare Bereich unter Rückgriff auf das entsprechende Modell nachgebildet werden und diese Daten werden für weitere Berechnungen wie eine Extrapolation genutzt.

Blending:

Der Helligkeitsverlauf (Wichtungsfunktion) innerhalb der Blendzone 7 für die einzelnen Projektoren 2a, 2b, 2c, 2d ergibt sich auch aus einer sogenannten Schnittmenge der projizierten Fläche. Diese Schnittmenge bildet die Anzahl der übereinander projizierten Teilbilder 4 in der Blendzone 7 ab. Beispielsweise in einer Blendzone 7, in welcher sich die Teilbilder 4a und 4b überlagern, kann annähern davon ausgegangen werden, dass die benötigte Grund-Helligkeit in dieser Blendzone 7 je Projektor 2a und 2b halbiert werden kann. Für ein Beispiel mit einer Blendzone 7, in welcher sich die Teilbilder 4a, 4b, 4c und 4d überlagern, kann annähern davon ausgegangen werden, dass die benötigte Grund-Helligkeit in dieser Blendzone 7 je Projektor 2a, 2b, 2c und 2d auf ein Viertel reduziert werden kann.

Der Helligkeitsverlauf ist außerdem von der zur Darstellung eines Bildes auf der gesamten Projektionsfläche 3 genutzten Teilfläche abhängig. Dies betrifft beispielsweise in ihrer Größe beschränkte Darstellungen, welche nicht die gesamte Projektionsfläche 3 benötigen.

In einem speziellen Fall, in welchem es beispielsweise einem Projektor 2a durch ein in seinem Projektionsbereich befindliches festes Hindernis nicht möglich ist, sein Teilbild 4a auf einen Teil der Projektionsfläche 3 zu projizieren, ist es vorgesehen, dass die Darstellung des Inhaltes in diesem Bereich durch den Projektor 2b mit seinem Teilbild 4b übernommen wird. Für diesen Fall muss der Helligkeitsverlauf in diesem Bereich für den Projektor 2b entsprechend angepasst, also erhöht werden, da er diesen Bereich allein ausleuchten muss. Eine derartige Anpassung ist natürlich nur innerhalb der Blendzone 7 möglich, da sich die Teilbilder 4a und 4b der Projektoren 2a und 2b überlappen müssen.

**Bezugszeichenliste**

| | |
|---|---|
| 1 | Projektionssystem |
| 2, 2a, 2b, 2c, 2d | Projektor |
| 3 | Projektionsfläche (gekrümmt) |
| 4, 4a, 4b, 4c, 4d | Teilbild |
| 5 | großflächige Projektion |
| 6 | ebene Projektionsfläche |
| 7 | Blendzone |
| 8, 8' | Marker |
| 9, 9', 9a, 9b, 9c, 9d | Messpunkt (X-, Y,- Z-Koordinate)($Q_o$; $Q_1$; $Q_2$; ...; $Q_n$) |
| 10 | Blendmaske |
| 11, 11a, 11b | Teilfläche (Dreieck) |
| 12, 12a, 12b | Kamera |
| 13, 13a, 13b | Sichtstrahl |
| 14, 14a, 14b | Winkel $\alpha$ |
| 15, 15a, 15b, 15c, 15d | Modellpunkte ($M_0$; $M_1$, $M_2$; ...; $M_n$) |
| 16 | Erfassungsbereich erste Kamera |
| 17 | Erfassungsbereich zweite Kamera |
| 18 | Diagonale |
| 19 | erster Abstand zum Zentrum |
| 20 | zweiter Abstand zum Zentrum |

**Patentansprüche**

1. Verfahren zur automatischen Wiederherstellung eines eingemessenen Zustands eines Projektionssystems (1) mit mindestens zwei Projektoren (2),

   wobei bei dem Einmessen des Projektionssystems (1) m mal n Marker (8) in einer Matrix mit m in einer Zeile projizierten Markern (8) und n Zeilen, auf eine Projektionsfläche (3) projiziert werden, aus welchen mittels einer oder mehrerer Kameras (12) m mal n erste erfasste Messpunkte (9) mit je einer X-, Y- und Z-Dimension einer 3D-Koordinate (X, Y, Z), welche auf der Projektionsfläche (3) und somit auf einer Oberfläche eines bekannten oder zu bestimmenden 3D-Modells liegt, bestimmt werden,
   wobei eine Zuordnung von Projektorkoordinaten (xp, yp), welche zweidimensionale Koordinaten in einem von einem Projektor (2) darzustellenden Bild sind, zu 3D-Koordinaten (X, Y, Z) in einem dreidimensionalen Koordinatensystem mit je einer X-, Y- und Z-Dimension, eine Transformation $_pk_m$ von Projektorkoordinaten (xp, yp) in mindestens zweidimensionale Mappingkoordinaten (u, v) und eine Transformation $_mk_p$ von mindestens zweidimensionalen Mappingkoordinaten (u, v) in Projektorkoordinaten (xp, yp) bereitgestellt werden,
   wobei aus bekannten Koordinaten-Paaren ((xp, yp); (u, v)) in den Projektorkoordinaten und Mappingkoordinaten Interpolationen bestimmt werden, mit denen die Transformationen $_pk_m$ und $_mk_p$ für beliebige Koordinaten geschätzt werden, und

wobei das Verfahren folgende Schritte umfasst:

Berechnen einer Position und einer Orientierung der einen oder mehreren Kameras (12) innerhalb des Projektionssystems (1), wobei Festpunkte verwendet werden,
erneutes Projizieren der m mal n Marker (8') auf die Projektionsfläche (3),
Bestimmen mittels der einen oder mehreren Kameras (12) einer Vielzahl von erfassten zweiten Messpunkte (9') mit je einer X-, Y- und Z-Dimension einer 3D-Koordinate (X', Y', Z'), deren Anzahl gegenüber den ersten erfassten Messpunkten (9) reduziert ist, weil Teilbereiche der Projektionsfläche (3) mittels der einen oder mehreren Kameras (12) nicht eingesehen werden können und/oder weil ungenau erfasste zweite Messpunkte (9') von einer weiteren Berechnung ausgeschlossen werden,
Berechnen einer Vielzahl von Abweichungen (OffsetX, OffsetY, OffsetZ) zwischen den erfassten zweiten Messpunkten (9') und den zugehörigen ersten erfassten Messpunkten (9),
Bilden einer Vielzahl von Verschiebungsvektoren (Offset(XYZ)) mittels der Vielzahl von Abweichungen,
Anpassen der Zuordnung der Projektorkoordinaten (xp, yp) zu 3D-Koordinaten (X', Y', Z') mittels der Vielzahl von Verschiebungsvektoren, wobei die 3D-Koordinaten (X', Y', Z') der nicht erfassten zweiten Messpunkte (9') durch eine Interpolation der Verschiebungsvektoren bestimmt wird, und
Bereitstellen von korrigierten Transformationen $_p k_m$ und $_m k_p$ zur Erzeugung von Teilbildern (4a, 4b, 4c, 4d) für jeden Projektor (2a, 2b, 2c, 2d).

2. Verfahren nach Anspruch 1, wobei das Bestimmen der Vielzahl von erfassten zweiten Messpunkte (9') umfasst:

Ermitteln eines Messpunkts (9') $Q_{mittel}$ basierend auf einer Mittelwertbildung,
wobei dieser Mittelwert aus einem von einer ersten Kamera (12a) erfassten zweiten Messpunkt (9') $Q_{cam1}$ und einem von einer zweiten Kamera (12b) erfassten zweiten Messpunkt (9') $Q_{cam2}$ des gleichen auf der Projektionsfläche (3) projizierten Markers (8') ermittelt wird.

3. Verfahren nach Anspruch 1, wobei das Bestimmen der Vielzahl von erfassten zweiten Messpunkte (9') umfasst:

Auswählen eines von einer ersten Kamera (12a) oder von einer zweiten Kamera (12b) erfassten zweiten Messpunkts (9') $Q_{cam0}$ oder $Q_{cam1}$,
wobei diese Auswahl derart getroffen wird, dass derjenige erfasste zweite Messpunkt (9') zur weiteren Verarbeitung genutzt wird, welcher zu der Kamera (12a oder 12b) zugehörig ist, bei welcher sich zwischen dem jeweiligen Sichtstrahl (13a, 13b) der Kamera (12a, 12b) der kleinste Winkel (14a, 14b) zur Projektionsfläche (3) ergibt.

4. Verfahren nach Anspruch 1, wobei das Bestimmen der Vielzahl von erfassten zweiten Messpunkte (9') umfasst:

Wichten in Richtung eines von einer ersten Kamera (12a) erfassten zweiten Messpunkts (9') $Q_{cam0}$ oder in Richtung eines von einer zweiten Kamera (12b) erfassten zweiten Messpunkts (9') $Q_{cam1}$,
wobei die Wichtung in Abhängigkeit einer Lage des von der Kamera (12a, 12b) erfassten zweiten Messpunkts (9') $Q_{cam0}$ oder $Q_{cam1}$ von der Bildmitte der jeweiligen Kamera (12a, 12b) erfolgt, und
wobei eine erhöhte Wichtung in Richtung des zentraler gelegenen Messpunkts (9') vorgenommen wird.

**Claims**

1. Method for automatically restoring a calibrated state of a projection system (1) having at least two projectors (2),

wherein, during the calibration of the projection system (1), m times n markers (8) are projected in a matrix, having m markers (8) projected in one row and n rows, onto a projection surface (3), from which markers m times n first captured measurement points (9), with in each case an X-, Y- and Z-dimension of a 3D coordinate (X, Y, Z), which lies on the projection surface (3) and thus on a surface of a known 3D model or a 3D model that is to be determined, are determined by means of one or more cameras (12),
wherein an assignment of projector coordinates (xp, yp), which are two-dimensional coordinates in an image to be presented by a projector (2), to 3D coordinates (X, Y, Z) in a three-dimensional coordinate system with in each case an X-, Y- and Z-dimension, a transformation $_p k_m$ of projector coordinates (xp, yp) into at least two-dimensional mapping coordinates (u, v) and a transformation $_m k_p$ of at least two-dimensional mapping coordinates (u, v) into projector coordinates (xp, yp) are provided,

14

wherein, from known coordinate pairs ((xp, yp); (u, v)) in the projector coordinates and mapping coordinates, interpolations are determined with which the transformations $_pk_m$ and $_mk_p$ for any desired coordinates are estimated, and

wherein the method comprises the following steps:

calculating a position and an orientation of the one or more cameras (12) within the projection system (1), wherein fixed points are used, projecting the m times n markers (8') again onto the projection surface (3), determining by means of the one or more cameras (12) a plurality of captured second measurement points (9') with in each case an X-, Y- and Z-dimension of a 3D coordinate (X', Y', Z'), whose number is reduced compared to the first captured measurement points (9) because partial regions of the projection surface (3) cannot be seen by the one or more cameras (12) and/or because inaccurately captured second measurement points (9') are ruled out from any further calculation, calculating a multiplicity of deviations (OffsetX, OffsetY, OffsetZ) between the captured second measurement points (9') and the associated first captured measurement points (9),

forming a multiplicity of shift vectors (Offset(XYZ)) by means of the multiplicity of deviations, adapting the assignment of the projector coordinates (xp, yp) to 3D coordinates (X', Y', Z') by means of the multiplicity of shift vectors, wherein the 3D coordinates (X', Y', Z') of the non-captured second measurement points (9') are determined by an interpolation of the shift vectors, and

providing corrected transformations $_pk_m$ and $_mk_p$ to produce partial images (4a, 4b, 4c, 4d) for each projector (2a, 2b, 2c, 2d).

2. Method according to Claim 1, wherein the determination of the multiplicity of captured second measurement points (9') comprises:

ascertaining a measurement point (9') $Q_{mittel}$ on the basis of an averaging, wherein this average value is ascertained from a second measurement point (9') $Q_{cam1}$, captured by a first camera (12a), and a second measurement point (9') $Q_{cam2}$, captured by a second camera (12b), of the same marker (8') projected onto the projection surface (3).

3. Method according to Claim 1, wherein the determination of the multiplicity of captured second measurement points (9') comprises:

selecting a second measurement point (9') $Q_{cam0}$ or $Q_{cam1}$, captured by a first camera (12a) or by a second camera (12b),

wherein this selection is made in a manner such that the captured second measurement point (9') that is associated with that camera (12a or 12b) in which between the respective visual ray (13a, 13b) of the camera (12a, 12b) the smallest angle (14a, 14b) with respect to the projection surface (3) is obtained is used for further processing.

4. Method according to Claim 1, wherein the determination of the multiplicity of captured second measurement points (9') comprises:

weighting in the direction of a second measurement point (9') $Q_{cam0}$, captured by a first camera (12a), or in the direction of a second measurement point (9') $Q_{cam1}$, captured by a second camera (12b), wherein the weighting is effected in dependence of a location of the second measurement point (9') $Q_{cam0}$ or $Q_{cami1}$, captured by the camera (12a, 12b), from the image centre of the respective camera (12a, 12b), and wherein an increased weighting in the direction of the more central measurement point (9') is effected.

**Revendications**

1. Procédé permettant de rétablir automatiquement un état relevé d'un système de projection (1) comprenant au moins deux projecteurs (2),

dans lequel, lors du relevé du système de projection (1), m fois n marqueurs (8) dans une matrice comportant m marqueurs (8) projetés sur une rangée et n rangées sont projetés sur une surface de projection (3) parmi lesquels, au moyen d'une ou de plusieurs caméras (12), m fois n premiers points de mesure détectés (9) ayant respectivement une dimension X, Y et Z d'une coordonnée 3D (X, Y, Z) qui se trouve sur la surface de projection (3) et donc sur une surface d'un modèle 3D connu ou à déterminer sont déterminés,

dans lequel une attribution de coordonnées de projecteur (xp, yp), qui sont des coordonnées bidimensionnelles sur une image à représenter par un projecteur (2), à des coordonnées 3D (X, Y, Z) dans un système de coordonnées tridimensionnel ayant respectivement une dimension X, Y et Z, une transformation $_pk_m$ de coordonnées de projecteur (xp, yp) au moins en coordonnées de mappage bidimensionnel (u, v), et une transformation $_mk_p$ au moins de coordonnées de mappage bidimensionnel (u, v) en coordonnées de projecteur (xp, yp) sont fournies,

dans lequel, à partir de paires de coordonnées connues ((xp, yp) ; (u, v)) parmi les coordonnées de projecteur et les coordonnées de mappage, des interpolations sont déterminées avec lesquelles les transformations $_pk_m$ et $_mk_p$ sont estimées pour des coordonnées quelconques, et

dans lequel le procédé comprend les étapes suivantes consistant à :

 calculer une position et une orientation de ladite une ou des plusieurs caméras (12) à l'intérieur du système de projection (1) en utilisant des points fixes,

 projeter à nouveau les m par n marqueurs (8') sur la surface de projection (3),

 déterminer au moyen de ladite une ou des plusieurs caméras (12) une pluralité de deuxièmes points de mesure détectés (9') ayant respectivement une dimension X, Y et Z d'une coordonnée 3D (X', Y', Z') dont le nombre est réduit par rapport aux premiers points de mesure détectés (9) parce que des zones partielles de la surface de projection (3) ne sont pas visibles au moyen de ladite une ou des plusieurs caméras (12), et/ou parce que des deuxièmes points de mesure (9') détectés de manière imprécise sont exclus de tout calcul supplémentaire,

 calculer une pluralité d'écarts (OffsetX, OffsetY, OffsetZ) entre les deuxièmes points de mesure détectés (9') et les premiers points de mesure détectés (9) associés,

 former une pluralité de vecteurs de décalage (Offset(XYZ)) au moyen de la pluralité d'écarts, adapter l'attribution des coordonnées de projecteur (xp, yp) à des coordonnées 3D (X', Y', Z') au moyen de la pluralité de vecteurs de décalage, dans lequel les coordonnées 3D (X', Y', Z') des deuxièmes points de mesure non détectés (9') sont déterminées par une interpolation des vecteurs de décalage, et

 fournir des transformations $_pk_m$ et $_mk_p$ corrigées afin de produire des images partielles (4a, 4b, 4c, 4d) pour chaque projecteur (2a, 2b, 2c, 2d).

**2.** Procédé selon la revendication 1, dans lequel la détermination de la pluralité de deuxièmes points de mesure détectés (9') comprend :

 la détermination d'un point de mesure (9') $Q_{mittel}$ sur la base d'un calcul de moyenne,

 cette moyenne étant établie à partir d'un deuxième point de mesure (9') $Q_{cam1}$ détecté par une première caméra (12a) et d'un deuxième point de mesure (9') $Q_{cam2}$ détecté par une deuxième caméra (12b) du même marqueur (8') projeté sur la surface de projection (3) .

**3.** Procédé selon la revendication 1, dans lequel la détermination de la pluralité de deuxièmes points de mesure détectés (9') comprend :

 la sélection d'un deuxième point de mesure (9') $Q_{cam0}$ ou $Q_{cam1}$ détecté par une première caméra (12a) ou par une deuxième caméra (12b),

 cette sélection étant réalisée de telle sorte que pour la suite du traitement on utilise le deuxième point de mesure détecté (9') qui est associé à la caméra (12a ou 12b) qui produit le plus petit angle (14a, 14b) entre le faisceau de visée respectif (13a, 13b) de la caméra (12a, 12b) et la surface de projection (3).

**4.** Procédé selon la revendication 1, dans lequel la détermination de la pluralité de deuxièmes points de mesure détectés (9') comprend :

 la pondération en direction d'un deuxième point de mesure (9') $Q_{cam0}$ détecté par une première caméra (12a) ou en direction d'un deuxième point de mesure (9') $Q_{cam1}$ détecté par une deuxième caméra (12b),

 la pondération étant effectuée en fonction d'une position du deuxième point de mesure (9') détecté par la caméra (12a, 12b) $Q_{cam0}$ ou $Q_{cam1}$ par rapport au centre de l'image de la caméra (12a, 12b) respective, et

 une pondération augmentée étant effectuée en direction du point de mesure (9') situé plus près du centre.

Fig. 1

Stand der Technik

EP 3 711 289 B1

4a  4b  4c  4d

## Fig. 2

Stand der Technik

EP 3 711 289 B1

Fig. 3

Stand der Technik

Stand der Technik

Fig. 4

Fig. 5

Stand der Technik

Fig. 6

Stand der Technik

EP 3 711 289 B1

Fig. 7

Fig. 8

Fig. 9

EP 3 711 289 B1

Fig. 10

EP 3 711 289 B1

Fig. 11

Fig. 12

EP 3 711 289 B1

Fig. 13

EP 3 711 289 B1

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1434434 A1
- US 6456339 A1
- US 2016353068 A1
- EP 2854400 A1

**In der Beschreibung aufgeführte Nicht-Patentliteratur**

- **DRUCKSCHRIFT B. SAJADI ; A. MAJUMDER.** Autocalibrating Tiled Projectors on Piecewise Smooth Vertically Extruded Surfaces. *IEEE Transactions on Visualization and Computer Graphics,* 2011, vol. 17 (9), 1209-1222